(19) Europäisches Patentamt
European Patent Office
Office européen des brevets

(11) **EP 3 228 379 A1**

(12) **EUROPÄISCHE PATENTANMELDUNG**

(43) Veröffentlichungstag:
**11.10.2017 Patentblatt 2017/41**

(51) Int Cl.:
**B01D 63/08** *(2006.01)* **B01D 29/01** *(2006.01)*
**B01D 61/18** *(2006.01)*

(21) Anmeldenummer: **16163653.5**

(22) Anmeldetag: **04.04.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Weise, Ulrich**
**13597 Berlin (DE)**

(72) Erfinder: **Weise, Ulrich**
**13597 Berlin (DE)**

(74) Vertreter: **Patentanwälte Olbricht Buchhold Keulertz**
**Partnerschaft mbB**
**Bettinastraße 53-55**
**60325 Frankfurt am Main (DE)**

(54) **FILTERTASCHE MIT NOPPENSTRUKTURPLATTE**

(57) Die Erfindung betrifft eine Filtertasche (1) aufweisend eine Strukturplatte (3), wobei die Strukturplatte (3) im Bereich ihres äußeren Randes einen erhabenen Rahmen (4) aufweist an dem eine Membranschicht (2) anliegt, sodass auf beiden Seiten der Strukturplatte (3) ein Hohlraum in Form eines Filtratspalts (5) gebildet ist, wobei die Strukturplatte (3) einen Filtratauslass (7) aufweist und im Bereich eine Vielzahl an Noppen (6) aufweist und die Membranschicht (2) mit dem Rahmen (4) und den Noppen (6) der Strukturplatte (3) verklebt sind. Die Filtertasche kann in einem Beutelfilter oder einem Filtergerät verbaut sein.

Fig. 1

EP 3 228 379 A1

**Beschreibung**

Die Erfindung betrifft eine Filtertasche aufweisend eine zwischen zwei Membranschichten angeordnete flächige Strukturplatte mit einer Ober- und einer Unterseite, wobei die Strukturplatte im Bereich ihres äußeren Randes auf der Ober- und der Unterseite einen erhabenen umlaufenden Rahmen aufweist, an dem jeweils eine Membranschicht anliegt, sodass auf beiden Seiten der Strukturplatte jeweils ein Hohlraum in Form eines flächigen Filtratspalts gebildet ist, der auf der von der Strukturplatte abgewandten Seite jeweils von einer Membranschicht begrenzt wird. Weiterhin betrifft die Erfindung ein Verfahren zur Bereitstellung von Trinkwasser durch Aufreinigung von Rohwasser mit Hilfe der Filtertasche, eine Filtereinheit aufweisend mindestens zwei der genannten Filtertaschen, ein Filtermodul aufweisend mindestens eine genannte Filtereinheit, einen Beutelfilter, insbesondere Schlauchbeutelfilter, aufweisend die Filtertasche zur Bereitstellung von Trinkwasser durch Aufreinigung von Rohwasser, ein Filtergerät aufweisend die Filtertasche sowie Verwendungen der Filtertasche zur Aufreinigung von Flüssigkeiten.

Filtertaschen der vorstehenden Art sind beispielsweise in Filtereinsätzen von Membranfiltern zur Mikro- und Ultrafiltration von Flüssigkeiten vorhanden. Solche bekannten Filtereinsätze sind beispielsweise bei der Ultrafiltration zur Keim- und Feststoffabtrennung aus Abwasser bestimmt.

Eine gattungsgemäße Filtertasche und ein mehrere solcher Filtertaschen aufnehmender Filtereinsatz sind aus der EP 1 016 449 A2 bekannt. Die Filtertasche weist danach auf beiden Seiten der Grundplatte angeordnete, membranartige Filtermedien auf. Ein Rahmen soll vermeiden, dass die Filtermedien an der Grundplatte anliegen und hierdurch die Filterfläche verkleinert wird. Bei einer senkrechten Anordnung der Filtertaschen in dem Filtereinsatz können an dem Filtermedium anhaftende Schmutzteilchen durch eine Führung von Luftblasen über die Oberfläche des Filtermediums gelöst werden.

Aus der DE 30 33 423 A1 ist ein Blatt für einen Scheibenfilter bekannt, bei dem zwei Stützwände mit einem Abstand zur Bildung eines Hohlraumes angeordnet sind. Die Stützwände bilden jeweils einen gitterartigen offenen Rinnenaufbau zum Tragen eines Filtertuches.

Die US 2005/0123727 A1 offenbart eine Filtereinrichtung, bei der mehrere flache Membranelemente parallel nebeneinander auf einem Grundkörper angeordnet sind. Der Grundkörper weist eine Vielzahl von Bohrungen auf, über die Gasblasen zwischen die Membranelemente geleitet werden. Es ist jedoch wünschenswert, neben der Reinigung des Filtermediums mit Luftblasen auch eine Reinigung durch Rückspülung zu ermöglichen. Dies führt jedoch bereits bei geringen Drücken zu sehr großen Belastungen des Filtermediums.

Die WO 2008/055486 A1 zeigt eine Filtertasche, deren Innenraum einen Filtratabfluss zum Verbinden mit einem Filtratauslass hat, mit einem flächigen Filtermedium zur Begrenzung des Innenraums und mit einer Grundplatte zur Halterung des Filtermediums und mit einem Rahmen zur dichtenden Befestigung des Filtermediums an der Grundplatte. Zur Ermöglichung einer Reinigung der Filtertasche durch Rückspülung und zur Erhöhung der Standfestigkeit des Filtermediums wird dazu vorgeschlagen, dass innerhalb des Rahmens mehrere Befestigungen des Filtermediums an der Grundplatte angeordnet sind und dass die Befestigungen stegförmige Abstandhalter zur Beabstandung des Filtermediums von der Grundplatte aufweisen. Allerdings wird hierbei das Filtermedium mit den Abstandshaltern verschweißt. Im Bereich der Schweißnähte ist die Filterleistung allerdings reduziert. Auch wölbt sich das Filtermedium beim Rückspülen unter Umständen relativ weit nach außen.

Die WO 2006/044711 A1 zeigt eine Filtertasche aufweisend eine zwischen zwei Membranschichten angeordnete flächige Strukturplatte. Diese Strukturplatte weist Vorsprünge ("protrusions") auf. Die Vorsprünge umfassen Rippen, wie lange, schmale Erhebungen, zwischen denen sich Täler bzw. Kerben erstrecken, welche Fließkanäle bilden. Die Membran wird mit den Vorsprüngen verschweißt. Nachteil: Beim Verschweißen verschließt sich die Fläche und die aktive Membranfläche wird reduziert.

Die US 2004/0226886 A1 zeigt eine Filtertasche mit langgestreckten gewundenen Filtratkanälen, die voneinander mit einer kontinuierlichen Dichtung abgeschlossen sind. Die Stege zwischen den Kanälen werden mit der Membran über deren Länge verbunden. Dies mag zwar im Falle einer Membranbeschädigung von Vorteil sein, aber langgestreckte Filtratkanäle, die gegeneinander abgeschlossen sind, ermöglichen keine über die gesamte Filterfläche gleichmäßige Filterleistung. Weiterhin wird durch die großflächige Verbindung zwischen Membran und Stegen die aktive Membranfläche erheblich verringert.

Es ist jedoch wünschenswert, neben der Reinigung des Filtermediums mit Luftblasen auch eine Reinigung durch Rückspülung zu ermöglichen. Dies führt jedoch bereits bei geringen Drücken zu sehr großen Belastungen des Filtermediums.

Die Aufgabe bestand somit darin, eine Filtertasche der oben genannten Art bereitzustellen, die eine hohe Standzeit im Filterbetrieb und eine hohe Stabilität insbesondere bei Reinigung durch Rückspülung ermöglicht. Diese Filtertasche sollte nach einem weiteren Aspekt Anwendungen ermöglichen, die bei Bedarf auch ohne externe Energieversorgung praktikabel sind. Die Filtertasche soll weiterhin einfach herstellbar sein und dabei eine breite Materialauswahl sowohl für die Membran als auch die Strukturplatte erlauben.

Die genannte Aufgabe wird erfindungsgemäß dadurch gelöst, dass eine Filtertasche aufweisend eine zwischen zwei Membranschichten angeordnete flächige Strukturplatte mit einer Vorder- und einer Rückseite bereitgestellt wird, wobei die Strukturplatte im Bereich ihres äußeren Randes auf der Vorder- und Rückseite einen erhabenen umlaufenden Rahmen aufweist, an dem jeweils eine Membranschicht anliegt, sodass auf beiden Seiten der Strukturplatte jeweils ein Hohlraum in Form eines flächigen Filtratspalts gebildet ist, der auf der von der Strukturplatte abgewandten Seite jeweils von einer Membranschicht begrenzt wird und die Strukturplatte einen Filtratabzug aufweist, wobei die Strukturplatte auf der Vorder- und der Rückseite im Bereich innerhalb des Rahmens eine Vielzahl an Noppen aufweist und die Membranschichten mit den Noppen der Strukturplatte verklebt sind. Gemäß einer bevorzugten Ausgestaltung der Filtertasche weisen die Membranschichten jeweils eine Vliesschicht und eine aktive Membranschicht auf, wobei die Vliesschicht jeweils in das Innere des Filtratspalts weist und die aktive Membranschicht jeweils nach außen weist und eine äußere Begrenzung der Filtertasche bildet. Gemäß einer weiter bevorzugten Ausgestaltung der Filtertasche sind die Membranschichten auch mit den Rahmen der Strukturplatte verklebt. Die erfindungsgemäße Filtertasche stellt eine ausreichende Klebefläche zur Befestigung der Membranschichten zur Verfügung und gewährleistet gleichzeitig die freie Querschnittsfläche in Form eines flächenhaften Filtratspalts für das Filtrat möglichst groß zu halten, um damit dynamische Druckverluste zu minimieren. Eine ausreichende Klebefläche ergibt sich aus dem zulässigen Rückspüldruck der Filtertasche. Bei der Rückspülung wird Filtrat entgegen der Filtrationsrichtung in die Filtertasche hineingedrückt und tritt an der Oberfläche der Membranschichten aus. Dadurch entsteht eine Belastung der Klebefläche mit einer Kraft, die sich aus dem Rückspüldruck und der Membranoberfläche ergibt. Durch die flächenhafte und gleichmäßige Verklebung mit den Noppen ist die volle Rückspülbarkeit der Membran gewährleistet. Für den Betrieb und die Reinigung einer Membranschicht ist dies besonders vorteilhaft, insbesondere da Reinigungschemikalien in situ im laufenden Betrieb intervallartig auf einfache Art eingebracht werden können. Dies ist ein Vorteil insbesondere gegenüber linienhaften Filtratkanälen, da sich die Membran dort bei der Rückspülung linienhaft hervorwölben würde. Da die Noppen erfindungsgemäß mit den Membranschichten verklebt und nicht verschweißt sind, ist die Gefahr einer Membranschädigung weit geringer. Durch die Verklebung der Noppen mit den Membranschichten wird der Filtratfluss und die aktive Membranfläche nur geringfügig reduziert. Weiterhin haben die Noppen den Vorteil, dass durch deren Verklebung mit den Membranschichten eine Vielzahl, entsprechend der Vielzahl an Noppen, von Klebepunkten vorhanden sind, die voneinander unabhängig sind. Sollte, insbesondere während eines Rückspülvorgangs eine einzelne Verklebung einer Noppe mit der Membranschicht sich lösen hat dies kaum Auswirkungen auf benachbarte Verklebungen von Noppen. Dadurch wird eine verbesserte Standzeit erreicht. Dies ist insbesondere gegenüber im Stand der Technik vorgeschlagenen Verbindungen von Membranschichten mit langgestreckten Stegen von Vorteil. Verbindungen über solche Stege, geschweißt oder verklebt, neigen zum fortgesetzten Reißen, wobei sich die Verbindung zwischen Strukturplatte und Membranschicht, insbesondere während eines Rückspülvorgangs, über weite Bereiche lösen kann. Das Verkleben hat gegenüber dem Verschweißen unter anderem den Vorteil, dass eine hohe Adhäsion erreicht wird. Die Temperatur kann beim Verkleben, im Gegensatz zum Verschweißen, derart gering gewählt werden, dass die Membranschicht möglichst wenig oder gar nicht geschädigt wird.

Man erkennt, dass die Membranschicht im Sinne der vorliegenden Erfindung eine Compositmembran ist, welche wenigstens eine Vliesschicht und eine aktive Membranschicht aufweist.

Man erkennt weiterhin, dass der Filtratspalt vorzugsweise einen schmalen Raum bildet, der sich über die flächige Ausdehnung der Strukturplatte erstreckt und an dieser anliegt. Der Filtratspalt wird dabei an seinem äußeren Rand durch den umlaufenden Rahmen der Strukturplatte begrenzt. Weiterhin wird der Filtratspalt durch die Strukturplatte auf der einen Seite und der Membranschicht auf der anderen Seite begrenzt. Der Membranspalt erstreckt sich dabei zwischen den Noppen der Strukturplatte. Der Raum des Filtratspalts wird vorzugsweise nur durch die Noppen unterbrochen. Dieser Raum wird hier nachfolgend auch als Volumen des Filtratspalts bezeichnet. Man erkennt weiterhin, dass eine erfindungsgemäße Filtertasche zwei Filtratspalte aufweist.

Die genannte Vliesschicht besteht vorzugsweise aus einem dafür geeigneten Fasermaterial ausgewählt aus der Gruppe bestehend insbesondere aus Polysulfon (PSU), Polycarbonat (PC), Acrylnitril-Butadien-Styrol (ABS), Polyethylen (PE), Polypropylen (PP) und Polyethylenterephthalat (PET) oder Mischungen davon. Die Vliesschicht ist vorzugsweise als sogenanntes Nonwoven ausgebildet.

Die genannte Vliesschicht hat vorzugsweise eine Schichtdicke von 0,1 bis 0,5 mm, insbesondere von 0,2 bis 0,3 mm.

Die genannte aktive Membranschicht ist vorzugsweise eine Membran aufweisend ein Material ausgewählt aus der Gruppe bestehend aus Polysulfon (PSU), Polyethersulfon (PES), Polyacrylnitril (PAN), einem Cellulosepolymer, Polypropylen (PP), Polyethylen (PE), Polyvinylchlorid (PVC), Polyvinylidenfluorid (PVDF), Polytetrafluoroethylen. Bei der genannten aktiven Membranschicht kann es sich alternativ auch um eine auf einer Vliesschicht aufgebrachte keramische Membran handeln. Eine solche keramische Membran kann wenigstens ein Oxid, ausgewählt aus $Al_2O_3$, $TiO_2$, $ZrO_2$ oder $SiO_2$, aufweisen.

Die genannte aktive Membranschicht ist eine zur Filtration geeignete Membranschicht, vorzugsweise eine Mikrofiltrationsmembran, eine Ultrafiltrationsmembran, eine Nanofiltrationsmembran oder eine Umkehrosmose-Membran.

Die genannte aktive Membranschicht weist vorzugsweise Poren mit durchschnittlicher Porengröße zwischen 0,001 μm und 5 μm auf, insbesondere zwischen 0,01 μm und 0,4 μm. Die Porengröße kann beispielsweise nach der "bubble point pore size" Methode bestimmbar sein.

Die Vliesschicht ist mit der aktiven Membranschicht in einer dem Fachmann geläufigen Art und Weise verbunden, vorzugsweise jedoch entweder indem ein die aktive Membranschicht bildendes Polymer flüssig auf das Vlies aufgebracht wird, wie etwa durch einen Phaseninversionsprozess, und dann nach einer Fällung ausgehärtet wird oder indem die aktive Membranschicht und das Vlies zunächst bereitgestellt werden und in einem anschließenden Verfahrensschritt mittels eines wasserdurchlässigen Klebstoffes laminiert werden.

Die Strukturplatte besteht vorzugsweise aus einem Kunststoff ausgewählt aus der Gruppe bestehend aus Polypropylen (PP), Polyester, Polystyrol (PS), Polyethylen (PE), Polysulfon (PSU), Polyethersulfon (PES), Polyimid, Polyetherimid, Polyamid (PA), Acrylnitril-Butadien-Styrol (ABS), Polyvinylchlorid (PVC), ein Perfluoroalkoxy-Polymer (PFA), fluoriertes Ethylenpropylen (FEP), Polyvinylidenfluorid (PVDF), Polyetheretherketon (PEEK), Polyacrylonitril (PAN) und Polytetrafluoroethylen (PTFE). Der Polyester kann beispielsweise ein Polyethylenterephthalat (PET), Polybutylenterephthalat (PBT), Polycarbonat (PC) oder ähnliches sein. Der Kunststoff ist insbesondere danach ausgewählt, eine Beständigkeit gegenüber den zu filtrierenden Flüssigkeiten zu gewährleisten, falls erforderlich, lebensmitteltauglich, möglichst verzugfrei extrudierbar, gut verklebbar und kostengünstig zu sein. Bei dem Kunststoff handelt es sich insbesondere um einen thermoplastischen Kunststoff. Der Kunststoff kann bei Bedarf faserverstärkt sein.

Die Strukturplatte ist bei Bedarf flexibel oder steif ausgestaltet. Die Strukturplatte ist insbesondere steif ausgebildet. Letzteres hat den Vorteil, dass die Filtertasche eine gute Gesamtstabilität aufweist.

Man erkennt, dass die erfindungsgemäße Filtertasche nach einer bevorzugten Ausführung einen stabilen, und insbesondere verwindungssteifen, Sandwichverbund bildet, wobei dies im Wesentlichen dadurch erreichbar ist, dass ein solcher Sandwichverbund aus der mit Noppen versehenen Strukturplatte, insbesondere einer steifen Strukturplatte, und einer beidseitig darauf verklebten Membranschicht hergestellt ist. Ein Vorteil einer solchen Sandwichkonstruktion ist die minimierte Dicke der Strukturplatte bei gleichzeitig maximaler Biegesteifigkeit. Dadurch kann beispielsweise die Packungsdichte eines bei Bedarf eingesetzten Filtertaschenstapels erhöht werden.

Die Strukturplatte weist nach einer bevorzugten Ausführung der Filtertasche eine im Wesentlichen viereckige oder eine runde Form, einschließlich jeweils Teilsegmenten davon, auf. Im Falle einer viereckigen Form, weist die Strukturplatte vorzugsweise eine trapezförmige, eine rechteckige oder eine quadratische Form auf. Man erkennt, dass gegebenenfalls vorhandene Ecken der Strukturplatte bei Bedarf abgerundet sein können. Die Form der Filtertasche folgt vorzugsweise der Form der Strukturplatte im Wesentlichen.

Die Strukturplatte weist nach einer weiteren bevorzugten Ausführung der Filtertasche eine Längsachse und eine Querachse auf. Man erkennt, dass insbesondere bei einer rechteckigen oder quadratischen Form zwei gegenüberliegende Abschnitte des Rahmens parallel zu der Längsachse und jeweils zwei weitere gegenüberliegende Abschnitte des Rahmens parallel zu der Querachse verlaufen.

Nach einer bevorzugten Ausführung der Filtertasche können die Noppen mit den Membranschichten punktuell verklebt sein. Insbesondere die dadurch erreichbare geringe Distanz zwischen Oberflächenbereichen der Membranschichten, die verklebt sind und Oberflächenbereichen, die nicht verklebt sind, ermöglicht, sowohl den Filtratfluss als auch die aktive Membranfläche nicht zu reduzieren.

Gemäß einer vorteilhaften Weiterentwicklung der Filtertasche sind die Membranschichten mit den Rahmen und den Noppen der Strukturplatte bei Bedarf derart verklebt, dass ein dazu verwendeter Klebstoff nicht in direktem Kontakt mit der aktiven Membranschicht, sondern ausschließlich in Kontakt mit der Vliesschicht der Membranschichten steht. Dadurch wird erreicht, dass die für die Filtration aktive Fläche der aktiven Membranschicht nicht verringert wird. Die Noppen werden mit anderen Worten also vorzugsweise lediglich mit der Vliesschicht der Membranschicht verklebt, sodass die für die Filtration aktive Fläche der aktiven Membranschicht nicht verringert wird. Die Membranschichten sind insbesondere nicht mit den Noppen verschweißt, sondern verklebt. Da der Klebstoff, wie angegeben, vorzugsweise nicht mit der aktiven Membranschicht in Kontakt kommt, also beim Verkleben nicht bis zur aktiven Membranschicht hin in das Gewebe der Vliesschicht eindringt, wird die für die Filtration aktive Membranfläche nicht verringert. Wasser, das oberhalb einer Klebestelle in die Membranschicht eindringt, wird seitlich von der Vliesschicht abgeleitet und kann neben der Verklebung in den Filtratspalt abfließen.

Nach einer vorteilhaften Weiterentwicklung der Filtertasche ist der Klebstoff ein Hotmelt- oder Lowmelt-Klebstoff, ein reaktiver Schmelzklebstoff, wie beispielsweise aus der Gruppe der Polyurethane oder der Silanterminierten Schmelzklebstoffe, oder ein anderer Kunststoffkleber. Ein Hotmelt-Klebstoff ist vorzugsweise ausgewählt aus der Gruppe von Basispolymeren bestehend aus EVA (Ethylenvinylacetat Copolymer), PO (Polyolefin), APAO (Amorphe Poly-α-olefine), SBS, SIS (Synthetischer Kautschuk), Polyamid (PA), Polyester (wie PET) und TPU (Thermoplastische Polyurethane). Ein Lowmelt-Klebstoff weist als Basispolymer vorzugsweise ein EVA (Ethylenvinylacetat Copolymer) auf.

Der Klebstoff weist vorzugsweise eine Verarbeitungstemperatur auf, die zwischen 80°C und 200°C, besonders bevorzugt zwischen 120°C und 180°C, liegt. Die Verarbeitungstemperatur des Klebstoffs liegt vorzugsweise unter der Erweichungstemperatur des Membranmaterials der aktiven Membranschicht. Dadurch kann eine Schädigung der aktiven Membranschicht beim Verkleben mit der Strukturplatte vermieden werden.

Der Klebstoff ist nach einer weiteren vorteilhaften Ausführung der Filtertasche hinsichtlich dessen Viskosität derart ausgewählt, dass beim Klebevorgang des Verklebens der Membranschichten mit den Noppen der Strukturplatte gewährleistet ist, dass der Klebstoff beim Verkleben in die Vliesschicht eindringt, aber nicht mit der aktiven Membranschicht in Kontakt kommt, also beim Verkleben nicht bis zur aktiven Membranschicht durch die vollständige Dicke der Vliesschicht eindringt. Ein ausreichender Halt der Membranschichten an den Noppen kann damit erreicht werden, ohne dass die für Filtration aktive Membranfläche verringert wird.

Der Klebstoff ist nach einer weiteren vorteilhaften Ausführung der Filtertasche derart ausgewählt, dass keine Abgabe von Substanzen, die sich eventuell aus dem Klebstoff lösen könnten, in das Filtrat erfolgt. Eine Verunreinigung des Filtrats kann somit vermieden werden. So kann der Klebstoff vorzugsweise ein für Lebensmittel zertifizierter Klebstoff sein.

Erfindungsgemäß sind die Membranschichten mit den Rahmen und den Noppen der Strukturplatte verklebt und insbesondere die Membranschichten nicht mit den Noppen verschweißt. Die genannten typischen Materialien für die aktive Membranschicht, wie beispielsweise PES (Polyethersulfon) und andere, haben eine Erweichungstemperatur, wie beispielsweise von ca. 220°C. Da die Materialien der Strukturplatte und damit vorzugsweise gleichzeitig extrudierter Noppen meist PP- oder PE-Kunststoffe sind, müssten relativ hohe Schweißtemperaturen gewählt werden, beispielsweise im Bereich von 200° bis 240° C. Die Gefahr einer Schädigung der Membranporen oder einer nicht kontrollierbaren Veränderung der Membrandurchlässigkeit wäre damit besonders groß. Tatsächlich waren bei derart hergestellten Membrantaschen häufig Verbrennungen der Membranoberfläche zu beobachten. Da sich nur gleiche Materialen verschweißen lassen und die Vliesschicht einer Membranschicht, wie von einer Mikro- oder Ultrafiltrationsmembran, im beispielsweise aus PE oder PP besteht, entfällt die Möglichkeit, ein besser geeignetes Material für die Strukturplatte auszuwählen. Demgegenüber können vorteilhafterweise beim Verkleben auch völlig verschiedenartige Materialien eingesetzt werden. Durch die geeignete Auswahl eines Klebstoffes kann die Verarbeitungstemperatur so gewählt werden, dass die Membranschicht, insbesondere die aktive Membranschicht beim Verkleben nicht geschädigt wird.

Ein weiterer Aspekt der vorliegenden Erfindung betrifft die Herstellung der erfindungsgemäßen Filtertasche. Dazu kann bei Bedarf der genannte Klebstoff bei einer geeigneten Verarbeitungstemperatur zwischen 80 und 200°C, vorzugsweise zwischen 120 und 180°C, auf die Strukturplatte aufgetragen werden und unmittelbar anschließend wird die Membranschicht aufgelegt, wobei die Vliesschicht in Richtung der Strukturplatte zeigt und die aktive Membranschicht nach außen zeigt. Mit einem leichten Druck kann dann die Membranschicht in den Klebstoff gedrückt werden. Besonders vorteilhaft ist es, zunächst den Klebstoff auf die Strukturplatte aufzutragen und den Klebstoff anschließend erkalten zu lassen. In einem weiteren Schritt kann die Membranschicht auf die Strukturplatte, welche mit Klebstoff versehen ist, aufgelegt werden und durch Druck und gleichzeitiges Erwärmen bis zur Erweichungstemperatur des Hotmelt- oder Lowmelt-Klebstoffs, geklebt werden. Durch die Auswahl des Klebstoffes aufweisend eine Verarbeitungstemperatur, die unter, insbesondere deutlich unter, der Erweichungstemperatur der Materialien der Membranschicht, insbesondere des Membranmaterials der aktiven Membranschicht, liegt, kann eine Schädigung der Membran ausgeschlossen werden. Für den Fall, dass die Höhe des Rahmens mir der Höhe der Noppen übereinstimmt, ist es besonders einfach, den Klebstoff mit Walzen auf die Strukturplatte, also auf den Rahmen und die Noppen aufzutragen und anschließend die Membranschicht mit Rollen anzudrücken.

Gemäß einer vorteilhaften Weiterentwicklung der Filtertasche sind die Noppen auf der Vorder- und der Rückseite der Strukturplatte entlang eines Rasters gleichmäßig verteilt. Mit anderen Worten weist die Filterplatte nach einer bevorzugten Ausführung der Filtertasche punktuell, entlang eines Rasters, regelmäßig angeordnete Noppen auf. Ein geeignetes Raster könnte eine Abmessung von 2 x 2 mm bis 10 x 10 mm besitzen. Das Raster, hier auch als Abstandsraster bezeichnet, der Noppen ist damit so gewählt, dass die Durchbiegung der Membranschicht aufgrund der Beaufschlagung mit einem Filtrationsdruck nicht zu groß wird. Das Raster kann insbesondere schräg zur Längsachse und zur Querachse der Strukturplatte ausgerichtet sein, vorzugsweise in einem Winkel von etwa 45° zur Längsachse und zur Querachse der Strukturplatte ausgerichtet sein.

Die Noppen weisen vorzugsweise die Form eines Prismas oder eine zylindrische Form auf. Die Grundfläche, also auch die mit der Membranschicht und/oder dem Klebstoff in Kontakt stehende Fläche der Noppen ist vorzugsweise eine Kreisfläche, ein Oval oder ein Vieleck oder ein beliebiges Segment dessen.

Nach einer vorteilhaften Ausführung der Strukturplatte beträgt die Belegungsdichte B der Strukturplatte mit Noppen innerhalb des Rahmens zwischen 10 bis 30%, vorzugsweise zwischen 10 bis 20%. Mit anderen Worten sind die Noppen somit vorzugsweise in der Art auf der Vorder- und der Rückseite der Strukturplatte entlang des genannten Rasters gleichmäßig verteilt, dass die Belegungsdichte B der Strukturplatte mit Noppen innerhalb des Rahmens zwischen 10 bis 30%, vorzugsweise zwischen 10 bis 20%, beträgt. Dadurch wird ein möglichst großer freier Abflussquerschnitt erreicht, sodass der dynamische Druckverlust im Filtratspalt minimiert ist. Unter dem freien Abflussquerschnitt wird dabei der Spaltquerschnitt abzüglich der im Querschnitt projizierten Noppenfläche verstanden. Die Belegungsdichte B hängt vom Rastermaß und dem Durchmesser der Noppen ab. Die Belegungsdichte B ergibt sich aus

$$B = \frac{\pi \; x \; r^2 \; x \; z}{l \; x \; b}$$

mit

z: Anzahl der Noppen auf einer Seite der Strukturplatte

r: Radius einer Noppe

l: Länge der Strukturplatte innerhalb des Rahmens

b: Breite der Strukturplatte innerhalb des Rahmens.

Gemäß einer weiteren Abwandlung der Filtertasche ist die Strukturplatte einstückig hergestellt. Demnach sind insbesondere die Noppen und die Rahmen gemeinsam mit der Strukturplatte einstückig hergestellt. Die Strukturplatte kann insbesondere durch Extrusion hergestellt sein.

Der umlaufende Rahmen ist im Wesentlichen geschlossenen, da er der Abdichtung des Filtratspaltes im äußeren Randbereich dient.

Der Filtratauslass befindet sich vorzugsweise innerhalb des genannten Rahmens der Strukturplatte. Es kann sich dabei um eine beliebige Struktur handeln, die dazu geeignet ist, das Filtrat aus dem Filtratspalt abzuleiten oder zum Zweck einer Rückspülung eine Rückspüllösung in den Filtratspalt einzuleiten. Der Filtratauslass kann insbesondere derart ausgestaltet sein, dass eine Öffnung innerhalb der Strukturplatte vorhanden ist. Eine solche Öffnung kann über, insbesondere jeweils versetzte, Durchbrüche am Umfang mit dem Filtratspalt verbunden sein. In der Öffnung sind weiter vorzugsweise Verbindungs- bzw. Dichtelemente einklebbar, die das Verbinden mehrerer Filtertaschen zu einer Stapel-Anordnung erlauben. Die Verbindungs- bzw. Dichtelemente können auch direkt mit weiteren Elementen verbindbar sein, wie beispielsweise einem Gehäuse eines Aktiv-Kohlefilters oder ähnlichem. Der Filtratauslass kann sich im Zentrum der Strukturplatte, in einem Randbereich der Strukturplatte oder in einem anderen Bereich der Strukturplatte innerhalb des Rahmens befinden. Im Einsatz sind die Filtertaschen regelmäßig vertikal ausgerichtet. Der Filtratauslass ist vorzugsweise im oberen Bereich Strukturplatte angeordnet, da sich ansonsten Luft oberhalb des Filtratauslasses im Filtratspalt absetzen könnte, die nicht mehr entweichen würde. Bei den Verbindungs- bzw. Dichtelementen kann es sich vorzugsweise um steckbare Filtratflansche, insbesondere je Filtertasche zwei solche Filtratflansche, handeln, die erforderlichenfalls mit O-Ringen versehen sind. Auf diese Weise sind mehrere Filtertaschen filtratseitig miteinander verbindbar oder weitere Elemente anschließbar. Derartige Verbindungs- bzw. Dichtelemente, insbesondere Filtratflansche, weisen innerhalb ihres inneren Umfangs geeignete Öffnungen auf oder sind gegeneinander geringfügig beabstandet, sodass das Filtrat durch die Filtratflansche hindurch die Filtertasche verlassen kann. Mit anderen Worten ermöglicht die Bauweise der Filtratflansche einen Austritt des Filtrats aus der Filtertasche in einen durch die Filtratflansche gebildeten Hohlraum. Bei den Öffnungen handelt es sich beispielsweise um Bohrungen oder Schlitze und ähnliches.

Nach einer besonders bevorzugten Ausführung der Filtertasche weist die Filterplatte neben den Noppen innerhalb des Rahmens keine anderen, insbesondere keine langgestreckten, Strukturen, wie Abstandshalter, Befestigungen, Filtratkanäle oder Ähnliches, auf, abgesehen von gegebenenfalls vorhandenen Strukturen eines Filtratauslasses. Mit anderen Worten weist der Filtratspalt also abgesehen von den Noppen und von gegebenenfalls vorhandenen Strukturen eines Filtratauslasses keine anderen Strukturen innerhalb des Rahmens auf.

Nach einer weiter bevorzugten Abwandlung der Filtertasche weist die Filterplatte Noppen mit ausgewählter Länge, ausgewähltem Durchmesser und/oder ausgewähltem Abstand auf. Die Noppen können bezüglich der Länge, des Durchmessers und des Abstandes untereinander so ausgewählt sein, dass optimale Eigenschaften der Filtertasche hinsichtlich der Filtrationsleistung, der Rückspülfähigkeit und der Biegesteifigkeit erzielt werden.

Die mit der Membranschicht zu verklebende Oberfläche einer einzelnen Noppe beträgt gemäß einer bevorzugten Ausgestaltung der Filtertasche 0,5 bis 50 mm², weiter vorzugsweise 1 bis 20 mm². Mit anderen Worten können die Noppen einen Durchmesser von 0,8 bis 8 mm, vorzugsweise von 1 bis 5 mm aufweisen. Damit ist zum einen die Übertragung einer ausreichenden Klebkraft entsprechend der zu verklebenden Oberfläche gewährleitet und einstellbar. Zum anderen steht dadurch eine ausreichend große freie Fläche für das Filtrat zur Verfügung, um möglichst druckverlustfrei zum Filtratauslass zu gelangen. Je kleiner die mit der Membranschicht zu verklebende Oberfläche einer einzelnen Noppe ist, also je kleiner die Grundfläche einer einzelnen Noppe ist, umso größer ist das Volumen des Filtratspalts, also umso größer ist die freie Querschnittsfläche im Filtratspalt. Der Vorteil von großen freien Querschnittsflächen im Filtratspalt ist ein geringer dynamischer Druckverlust auf der Filtratseite. Ein hoher dynamischer Druckverlust ist demgegenüber von Nachteil, da ein solcher zur Notwendigkeit von höheren Filtrationsdrücken auf der Rohwasserseite führt, damit der gleiche TMP (transmembrane pressure) erzielt wird. Mit höheren Filtrationsdrücken erhöht sich aber gleichzeitig die Kraft, mit der beispielsweise Partikel oder Belebtschlamm gegen die Membran gedrückt werden. Da typische Anwendungen für die erfindungsgemäße Filtertasche im Bereich der Membranbioreaktoren oder Oberflächenwasserfiltration liegen, ist eine möglichst wenig komprimierte Deckschicht entscheidend für den Reinigungserfolg. Eine solche Deckschicht entsteht bei der Filtration durch Anlagerung von Partikeln auf der Membran. Die dargestellte Anordnung der Noppen auf der Strukturplatte ermöglicht, dass die durch eine Scherströmung (Cross Flow oder Semi-Cross Flow) an der Membranschicht erzielten Kräfte quer zur Membranoberfläche größer sind, als die Adhäsionskräfte, die beispielsweise Partikel oder Belebtschlamm an die Membranschicht, insbesondere die aktive Membranschicht, binden.

Gemäß einer weiteren Abwandlung der Filtertasche beträgt die Höhe der Noppen vorzugsweise zwischen 0,3 und 15 mm, weiter bevorzugt zwischen 0,5 und 5 mm. Über die Höhe der Noppen der Strukturplatte lässt sich in vorteilhafter Weise die Höhe des flächigen Filtratspaltes einstellen. In diesem Spalt zwischen Strukturplatte und der an dem Rahmen und den Noppen anliegenden Membranschicht, also in dem Filtratspalt, bildet sich nach Hagen-Poisseulle eine laminare Strömung aus. Durch die genannte Höhe des Filtratspaltes vorzugsweise zwischen 0,3 und 15 mm, weiter bevorzugt zwischen 0,5 und 5 mm, kann der dynamische Druckverlust im Filtratspalt wirksam, also beispielsweise auf etwa ca. 1 cm, begrenzt werden. Bei einer beispielhaften Höhe des Filtratspaltes von etwa 1,5 mm kann der dynamische Druckverlust im Filtratspalt der Filtertasche auf ca. 1 cm begrenzt werden, selbst wenn die Strukturplatte eine Ausdehnung in der Fläche, insbesondere eine Länge, von etwa 1 m aufweist.

Die genannte Höhe der Noppen ist auch in Bezug auf einen weiteren Aspekt von Bedeutung: Abhängig von der Höhe der Noppen werden bei einer gegebenenfalls erfolgenden Biegebeanspruchung der Strukturplatte Zugkräfte in die Membranschichten, insbesondere in eine der beiden Membranschichten, eingeleitet. Eine Membranschicht, welche wie bereits dargestellt insbesondere eine Compositmembran ist, also wenigstens eine Vliesschicht und eine aktive Membranschicht aufweist, kann Zugkräfte übertragen. Im Verbund mit der Strukturplatte wird auf diese Weise eine stabile, verwindungssteife Sandwichkonstruktion erzielt. Die Noppen mit der angegebenen Höhe vorzugsweise zwischen 0,3 und 15 mm, weiter bevorzugt zwischen 0,5 und 5 mm, bewirken eine höhere Biegesteifigkeit der Platte. Erfindungsgemäße Filtertaschen werden typischerweise in Membranbioreaktoren oder zur Filtration von Oberflächenwasser eingesetzt. Da im Rohwasser u.a. hohe Schlamm- oder Partikelkonzentrationen anzutreffen sind, ist es vorteilhaft, wenn offene Rohwasser-Kanäle zwischen verschiedenen Filtertaschen im Betrieb eine gleichbleibende geometrische Form aufweisen. Dadurch können die zur Reinigung aufgebrachten Cross-Flow oder Semi-Cross-Flow (mit Luftblasenspülung) Strömungen besonders effizient zur Reinigung eingesetzt werden. Beispielsweise hat es sich als vorteilhaft erwiesen, wenn bei einem Filtertaschenabstand zwischen zwei benachbarten Filtertaschen von ca. 6 mm eine Luftblase mit einer Größe von 8 bis 10 mm eingesetzt wird und eine sogenannte Pfropfenströmung (slug flow) erzielt wird. Die Wirksamkeit dieses Effektes ist abhängig von der definierten Geometrie der Filtertasche und des dazwischen befindlichen Spaltes. Weiterhin müssen die Filtertaschen eine genügende Stabilität aufweisen, damit sie sich im Betrieb bei Anordnung benachbarter Filtertaschen nicht berühren und sich zwei benachbarte Membranschichten zweier benachbarter Filtertaschen gegeneinander ansaugen.

Nach einer weiter bevorzugten Abwandlung der Filtertasche weist die Strukturplatte im Bereich ihres äußeren Randes auf der Vorder- und der Rückseite einen erhabenen umlaufenden Rahmen mit einer Höhe vorzugsweise zwischen 0,3 und 15 mm, weiter bevorzugt zwischen 0,5 und 5 mm auf. Höhe des Rahmens ist nach einer besonders bevorzugten Ausgestaltung der Filtertasche identisch zur Höhe der Noppen der Strukturplatte. Dies ermöglicht ein besonders einfaches Befestigen, insbesondere Verkleben, der Membranschichten an der Strukturplatte.

Nach einer weiter bevorzugten Abwandlung der Filtertasche ist der Rahmen zusätzlich zur Verklebung mit der anliegenden Membranschicht verschweißt. Eine solche zusätzliche Verbindung kann von Vorteil sein, um eine vollständige Abdichtung des Filtratspalts zu erreichen. Anders als bei der Verbindung durch Verkleben, insbesondere punktförmigen Verbindung, der Noppen mit der daran anliegenden Membranschicht, ist bei der Verbindung des Rahmens mit der Membranschicht nicht erwünscht, dass Wasser, das oberhalb einer Klebestelle in die Membranschicht eindringt, seitlich von der Vliesschicht abgeleitet wird und neben der Verklebung in den Filtratspalt abfließen kann. Insbesondere sollte verhindert werden, dass Flüssigkeit von außen in den Filtratspalt gelangt, ohne die Membranschicht, also die aktive Membranschicht zu passieren. Die Flüssigkeit darf nicht ausschließlich durch die Vliesschicht der Membranschicht von außen in den Filtratspalt gelangen. Dies kann wirksam durch das zusätzliche Verschweißen der Membranschicht mit dem umlaufenden Rand erreicht werden. Damit werden sowohl die Vliesschicht als auch die aktive Membranschicht im Bereich der Schweißnaht verschlossen.

Ein weiterer Aspekt der vorliegenden Erfindung betrifft ein Verfahren zur Bereitstellung von Trinkwasser durch Aufreinigung von Rohwasser umfassend die Schritte:

a) Bereitstellen von aufzureinigendem Rohwasser,
b) Filtration des Rohwassers mit Hilfe einer Filtertasche gemäß einer der hierin beschriebenen Ausführungsformen, indem das Rohwasser durch die Membranschichten hindurch in die Filtratspalten geleitet wird und das gefilterte Wasser die Filtertasche durch mindestens einen Filtratauslass verlässt,
c) gegebenenfalls anschließende weitere Aufreinigung des in Schritt b) erhaltenen gefilterten Wassers mit Hilfe eines Aktiv-Kohle-Filters und
d) gegebenenfalls anschließende weitere Aufreinigung des in Schritt c) erhaltenen gefilterten Wassers mit Hilfe einer sich von b) und c) unterscheidenden weiteren Aufreinigungsmethode.

Man erkennt, dass zur Bereitstellung von Trinkwasser durch Aufreinigung von Rohwasser erfindungsgemäß bei Bedarf die Filtertaschen in aufzureinigendes Rohwasser eingetaucht oder in einer dazu geeigneten Vorrichtung von aufzureinigendem Rohwasser umspült werden. Im Reinigungsbetrieb wird dann das Rohwasser mit Hilfe eines Drucks von außen oder durch einen filtratseitig anliegenden Unterdruck durch die Membranschichten in das Innere der Filtertasche, nämlich in den Filtratspalt, gedrückt bzw. gezogen und dabei filtriert. Das Filtrat verlässt die Filtertasche über einen Filtratauslass. Von dort aus kann das Filtrat weitergeleitet und/oder gesammelt werden. Weitere Aufreinigungsschritte können sich bei Bedarf anschließen.

Ein weiterer Aspekt der Erfindung betrifft eine Filtereinheit aufweisend mindestens zwei der hierin beschriebenen Filtertaschen, wobei die Filtertaschen in einer Stapel-Anordnung vorgesehen sind und zwischen den Filtertaschen ein Spalt ausgebildet ist.

Erfindungsgemäße Filtereinheiten werden typischerweise in Membranbioreaktoren oder zur Filtration von Oberflächenwasser eingesetzt. Da im Rohwasser u.a. hohe Schlamm- oder Partikelkonzentrationen anzutreffen sind, ist es vorteilhaft, wenn offene Rohwasser-Kanäle zwischen verschiedenen Filtertaschen einer Filtereinheit im Betrieb eine gleichbleibende geometrische Form aufweisen. Dies wird durch die erfindungsgemäßen Filtertaschen erreicht. Dadurch können die zur Reinigung einer Filtereinheit aufgebrachten Cross-Flow oder Semi-Cross-Flow (mit Luftblasenspülung) Strömungen besonders effizient zur Reinigung eingesetzt werden.

Nach einer bevorzugten Ausgestaltung der Filtereinheit beträgt der Abstand zwischen zwei benachbarten Filtertaschen 1 bis 50 mm, vorzugsweise 1 bis 30 mm, weiter bevorzugt 1 bis 10 mm und noch weiter bevorzugt 4 bis 8 mm. Beispielsweise hat es sich als vorteilhaft erwiesen, wenn bei einem Filtertaschenabstand zwischen zwei benachbarten Filtertaschen von ca. 6 mm eine Luftblase mit einer Größe von 8 bis 10 mm eingesetzt wird und eine sogenannte Pfropfenströmung (slug flow) erzielt wird. Die Wirksamkeit dieses Effektes ist auch abhängig von der definierten Geometrie der Filtertasche und des dazwischen befindlichen Spaltes. Weiterhin müssen die Filtertaschen eine genügende Stabilität aufweisen, damit sie sich im Betrieb bei Anordnung benachbarter Filtertaschen nicht berühren und sich zwei benachbarte Membranschichten zweier benachbarter Filtertaschen gegeneinander ansaugen. Dies ist durch die erfindungsgemäßen Filtertaschen gewährleistet.

Ein weiterer Aspekt der Erfindung betrifft ein Filtermodul aufweisend mindestens eine genannte Filtereinheit, wobei die Filtereinheit in einem starren Gehäuse angeordnet ist und die Filtertaschen der Filtereinheit in das starre Gehäuse parallel zueinander eingesetzt sind. Das starre Gehäuse kann im Wesentlichen quaderförmig oder rohrförmig ausgeformt sein.

Das starre Gehäuse kann aus Metall oder vorzugsweise einem Kunststoff gefertigt sein. Der Kunststoff ist dazu insbesondere ausgewählt aus der Gruppe bestehend aus Polypropylen (PP), einem Polyester, Polystyrol (PS), Polyethylen (PE), Polysulfon (PSU), Polyethersulfon (PES), Polyimid, Polyetherimid, Polyamid (PA), Acrylnitril-Butadien-Styrol (ABS), Polyvinylchlorid (PVC), ein Perfluoroalkoxy-Polymer (PFA), fluoriertes Ethylenpropylen (FEP), Polyvinylidenfluorid (PVDF), Polyetheretherketon (PEEK), Polyacrylonitril (PAN) und Polytetrafluoroethylen (PTFE) und PUR (Polyurethan). Ein Kunststoff für das starre Gehäuse ist hier von besonderem Vorteil, da das Gehäuse dann durch Extrusion, Tiefziehen oder einen Gussprozess kostengünstig herstellbar ist und weiterhin beständig gegen im Wasser enthaltene Inhaltsstoffe ist.

Nach einer bevorzugten Weiterentwicklung des Filtermoduls sind die Filtertaschen in das starre Gehäuse einschiebbar und oder einsteckbar. Das Gehäuse weist dazu vorzugsweise geeignete Schienen und/oder Steckvorrichtungen auf. Die Filtertaschen werden im Betrieb von im Gehäuse einleitbarem Rohwasser umspült. Das Gehäuse weist vorzugsweise eine Einlassöffnung für aufzureinigendes Rohwasser auf. Die Filtertaschen sind filtratseitig, insbesondere über steckbare, erforderlichenfalls mit O-Ringen versehene, Filtratflansche, miteinander verbindbar. Das Filtrat kann das Gehäuse vorzugsweise über wenigstens eine Auslassöffnung verlassen, wozu insbesondere ein geschlitztes Rohr durch die Filtratflansche gesteckt und das geschlitzte Rohr mit der Auslassöffnung verbunden ist.

Nach einer weiteren bevorzugten Abwandlung des Filtermoduls weist der Rahmen der Filtertaschen wenigstens eine Öffnung auf. Solche Öffnungen können dazu eingerichtet sein, bei Aufbau der Stapel-Anordnung von Filtertaschen in der Filtereinheit, als Durchführung für Gewindestangen zu dienen, wobei vorzugsweise jeweils zwischen zwei Filtertaschen ein Distanzring angeordnet ist. Damit kann ein definierter Abstand der Filtertaschen in einem Bereich 1 bis 50 mm, vorzugsweise 1 bis 30 mm, weiter vorzugsweise von 1 bis 10 mm, besonders bevorzugt 4 bis 8 mm, eingestellt werden.

Ein weiterer Aspekt der Erfindung betrifft einen Beutelfilter, insbesondere Schlauchbeutelfilter, zur Bereitstellung von Trinkwasser durch Aufreinigung von Rohwasser, wobei der Beutelfilter, vorzugsweise in einem oberen Bereich, einen Zulauf zur Befüllung mit Rohwasser aufweist, im Inneren des Beutelfilters eine erfindungsgemäße Filtertasche angeordnet ist, sodass das Rohwasser aus dem Inneren des Beutelfilters in das Innere der Filtertasche, also in die beiden Filtratspalten der Filtertasche, gelangen kann und der Filtratauslass der Filtertasche mit einem außenliegenden Auslass verbunden ist. Bei Bedarf kann der Filtratauslass, vorzugsweise mittels Filtratflanschen oder ähnlichem, auch direkt mit einem außenliegenden Auslass verbunden oder verbindbar sein, also auch ohne ein Gehäuse für einen Aktivkohlefilter zur weiteren Filtration des den Beutelfilter verlassenden filtrierten Wassers.

Der Beutelfilter wird nach einer bevorzugten Ausführung durch eine dünne, insbesondere schlauchförmige, Folie gebildet. Dadurch lässt sich der Beutelfilter besonders günstig herstellen. Die Folie besteht vorzugsweise aus einem Material ausgewählt aus der Gruppe PE, PP, PET, OPA (orientiertes Polyamid), PA, OPP (orientiertes PP) und PTFE (Polytetrafluorethylen). Geeignete Folien sind dem Fachmann bekannt. Der Beutelfilter weist dadurch nur ein geringes Gewicht auf und lässt sich einfach transportieren und platzsparend lagern. Nach einer weiteren bevorzugten Abwandlung des Beutelfilters weist dieser im Randbereich wenigstens eine Aufhängung auf. Eine solche Aufhängung kann beispielsweise dazu eingerichtet sein, um eine Aufhängung des Beutelfilters derart zu ermöglichen, dass die Filtertasche in einer vertikalen Ausrichtung gehalten wird.

Nach einer vorteilhaften Ausführung des Beutelfilters, ist dieser als Standbodenbeutelfilter ausgestaltet. Das heißt, der Beutelfilter kann im einfachsten Fall nach Befüllung auf eine Auflage gestellt werden und ohne weitere Hilfsmittel betrieben werden. Bei einem solchen Standbodenbeutelfilter ist die genannte Folie nach Befüllung mit Rohwasser im unteren Bereich des Beutelfilters in der Form aufstellbar, dass sich ein Boden bildet, wie er von üblichen Schlauchbeuteln, wie im Lebensmittelverpackungsbereich, bekannt ist. Alternativ oder zusätzlich kann der Beutelfilter durch ein Zusammenpressen bedient werden, sodass eingefülltes Rohwasser aus dem Inneren des Beutelfilters in das Innere der Filtertasche, also in die beiden Filtratspalten der Filtertasche, gedrückt wird. Nach einer weiteren Alternative ist der Beutelfilter als Hängebeutel ausgebildet, wozu insbesondere eine Aufhängung im oberen Bereich des Beutelfilters vorgesehen sein kann. Insbesondere bei Ausführung des Beutelfilters als Standbodenbeutel oder als Hängebeutel bewirkt die zwischen dem Zulauf oder dem oberen Bereich des Beutelfilters und dem Auslass oder dem Filtratauslass stehende Wassersäule bereits allein, dass Rohwasser in die Filtertasche gedrückt wird.

Die Filtertasche erstreckt sich in dem Beutelfilter vorzugsweise nur über eine untere Hälfte des Beutelfilters. Der Filtratauslass befindet sich am oberen Ende der Filtertasche, sodass der direkt oder indirekt mit dem Filtratauslass verbundene Auslass etwa in der Mitte des Beutelfilters angeordnet ist.

Ein weiterer Aspekt der Erfindung betrifft ein Filtergerät aufweisend wenigstens eine darin angeordnete erfindungsgemäße Filtertasche. Insbesondere betrifft die Erfindung ein Filtergerät aufweisend

- einen Behälter zur Aufnahme von Rohwasser,
- wenigstens eine in dem genannten Behälter angeordnete erfindungsgemäße Filtertasche,
- wobei der Behälter zur Aufnahme von Rohwasser und die Filtertasche vorzugsweise in der Art zueinander angeordnet sind, dass das Wasser allein durch die Wirkung eines geostatischen Druckgefälles durch die wenigstens eine Filtertasche filtrierbar ist, also in den Filtratspalt gedrückt wird,

- gegebenenfalls ein an die wenigstens eine Filtertasche nachgeschaltetes Gehäuse eines Aktivkohlefilters, und
- gegebenenfalls einen an das Gehäuse eines Aktivkohlefilters nachgeschalteten Verteilerblock geeignet zur Aufteilung von filtriertem Wasser auf einzeln aus dem Filtergerät, nach Verschließen eines Absperrventils, entnehmbare Flaschen.

Das Filtergerät weist vorzugsweise wenigstens zwei der genannten Flaschen auf. Dadurch wird im Grunde ein kontinuierlicher Betrieb ermöglicht. Solange das Filtrat nicht benötigt wird, kann es jedoch in den einzelnen Flaschen geschützt im Filtergerät gelagert und erst bei Bedarf einzeln entnommen werden. Vorzugsweise ist der mindestens eine Filtratabzug der wenigstens einen Filtertasche über eine Verbindungsleitung mit dem Gehäuse des Aktivkohlefilters verbunden.

Zum Betrieb der Vorrichtung wird der genannte Behälter des Filtergeräts mit Rohwasser befüllt, indem über einen Einlass der Hohlraum des Behälters befüllt wird. Dazu weist der Behälter vorzugsweise einen Einlass auf. Die Filtertaschen befinden sich dann in der aufzureinigenden Flüssigkeit. Das Filtergerät weist insbesondere eine Mehrzahl an Filtertaschen auf. Diese Filtertaschen sind parallel zueinander in Sandwich-Anordnung vorgesehen und bilden eine Filtereinheit. Die Filtratabzüge der Filtertaschen sind über eine Verbindungsleitung, beispielsweise ein Kunststoffrohr, miteinander sowie mit dem Gehäuse des Aktivkohlefilters flüssigkeitsdurchströmbar verbunden. Bei Bildung einer solchen Stapel-Anordnung ist eine Filtertasche mit der nächsten so verbunden, dass ein durchgängiger Abflusskanal, wie die Verbindungsleitung, für das Filtrat entsteht, der gegen das Rohwasser hin abgedichtet ist. Durch die Filtratflansche mehrerer Filtertaschen ist die Verbindungsleitung in der Form eines Rohres geschoben, mit dem an einem Ende das Filtrat des Filtertaschenstapels entnommen werden kann.

Die Filtertaschen sind vorzugsweise im unteren Bereich des Behälters angeordnet, sodass die Wassersäule des Rohwassers ausreichend Druck zur Verfügung stellt, um das Rohwasser in den Innenraum der Filtertaschen zu drücken. Bei Bedarf können auch Hilfsmittel, wie Pumpen und ähnliches alternativ oder zusätzlich dazu vorgesehen sein. Das Filtrat verlässt die Filtertaschen durch die Filtratabzüge und die Verbindungsleitung. Die Verbindungsleitung mündet in das Gehäuse eines Aktivkohlefilters. Gemäß einer weiteren bevorzugten Ausführung ist in das Gehäuse des Aktivkohlefilters eine Patrone eines Aktivkohlefilters, also eine Aktivkohlefilter-Patrone, eingesetzt. Von einem Außenbereich des Gehäuses des Aktivkohlefilters fließt das Filtrat radial durch die Patrone des Aktivkohlefilters. Im Inneren der Patrone befindet sich ein Abflussraum für das Aktivkohle-behandelte Wasser. Am Boden des Gehäuses des Aktivkohlefilters schließt sich vorzugsweise ein Verteilerblock an, der geeignet ist zur Aufteilung von filtriertem Wasser auf einzeln aus dem Filtergerät, nach Verschließen eines Absperrventils, entnehmbare Flaschen. Das Filtergerät weist vorzugsweise mehr als eine, insbesondere drei Flaschen auf. Das Filtergerät kann in besonders vorteilhafter Weise unter alleiniger Ausnutzung des geostatischen Druckgefälles zur Aufreinigung von Rohwasser genutzt werden. Die einzelne Entnahme der Flaschen ermöglicht die bedarfsgerechte Bereitstellung des filtrierten Wassers. Solange das Wasser, wie Trinkwasser, nicht benötigt wird, kann es in den Flaschen im Filtergerät geschützt verbleiben.

Ein weiterer Aspekt der Erfindung betrifft eine Verwendung einer erfindungsgemäßen Filtertasche zur Aufreinigung von Flüssigkeiten in einem Membranbioreaktor oder zur Oberflächenwasserfiltration.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

Fig. 1 eine perspektivische Aufsicht auf eine erfindungsgemäße Filtertasche,

Fig.2 eine gerade Aufsicht auf eine erfindungsgemäße Filtertasche,

Fig. 3A eine Schnittdarstellung einer erfindungsgemäße Filtertasche entlang der Schnittebene I-I aus Fig. 2,

Fig. 3B einen stark vergrößerten Ausschnitt der Schnittdarstellung einer erfindungsgemäße Filtertasche entlang der Schnittebene I-I aus Fig. 2,

Fig. 3C-D eine schematische Querschnittsdarstellung durch eine Membranschicht einer erfindungsgemäßen Filtertasche,

Fig. 4A eine schematische Darstellung der Ausrichtung der Noppen auf der Strukturplatte mit einer Durchbiegung der Membranschicht bei Beaufschlagung mit einem Filtrationsdruck,

Fig. 4B eine schematische Darstellung der Ausrichtung der Noppen auf der Strukturplatte mit einer Ausstülpung der Membranschicht bei Beaufschlagung mit einem Rückspüldruck,

Fig. 5 eine perspektivische Vorderansicht eines erfindungsgemäßen Beutelfilters, insbesondere Schlauchbeutelfilters, zur Bereitstellung von Trinkwasser,

Fig. 6A eine Vorderansicht eines erfindungsgemäßen Beutelfilters, insbesondere Schlauchbeutelfilters, zur Bereitstellung von Trinkwasser,

Fig. 6B eine Schnittdarstellung eines erfindungsgemäßen Beutelfilters, insbesondere Schlauchbeutelfilters, entlang der Schnittebene II-II aus Fig. 6A,

Fig. 6C einen vergrößerten Bereich eines Schnitts durch einen erfindungsgemäßen Beutelfilter, insbesondere Schlauchbeutelfilter, entlang der Schnittebene II-II aus Fig. 6A,

Fig. 7A eine Vorderansicht eines erfindungsgemäßen Filtergeräts aufweisend zeichnerisch nicht dargestellte erfindungsgemäße Filtertaschen,

Fig. 7B perspektivische Ansicht eines Schnittes durch ein erfindungsgemäßes Filtergerät entlang der Schnittebene III-III und

Fig. 7C gerade Ansicht eines Schnittes durch ein erfindungsgemäßes Filtergerät entlang der Schnittebene III-III.

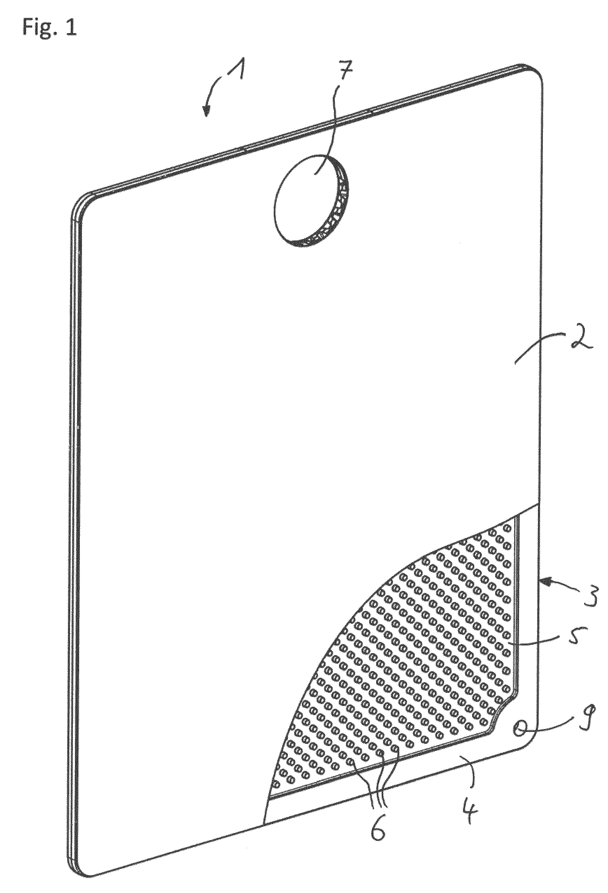

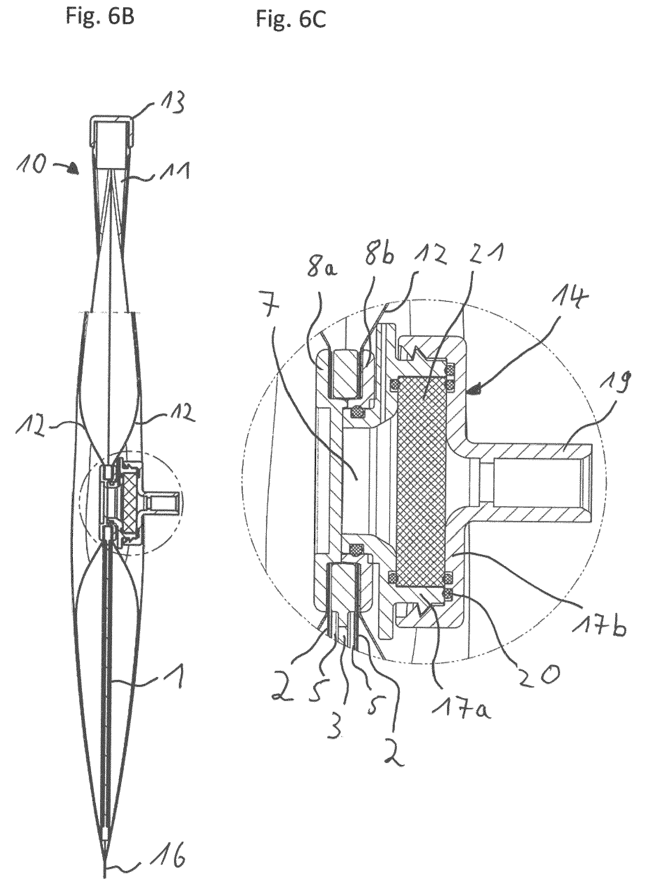

Fig. 1 zeigt eine perspektivische Aufsicht auf eine erfindungsgemäße Filtertasche 1. Die Filtertasche 1 weist eine zwischen zwei Membranschichten 2 angeordnete flächige Strukturplatte 3 mit einer Vorder- und einer Rückseite auf. In dieser Darstellung ist lediglich eine der beiden Membranschichten 2 erkennbar, nämlich die auf der Vorderseite anliegende. Die Strukturplatte 3 weist im Bereich ihres äußeren Randes auf der Vorder- und der Rückseite einen erhabenen umlaufenden Rahmen 4 auf. In dieser Darstellung ist lediglich der auf der Vorderseite der Strukturplatte 3 befindliche Rahmen 4 erkennbar. Die Membranschicht 2 liegt auf dem Rahmen 4 auf, sodass auf beiden Seiten der Strukturplatte 3 jeweils ein Hohlraum in Form eines flächigen Filtratspalts 5 gebildet ist, der auf der von der Strukturplatte 3 abgewandten Seite jeweils von einer Membranschicht 2 begrenzt wird. Die Strukturplatte 3 weist weiterhin auf der Vorder- und der Rückseite im Bereich innerhalb des Rahmens 4 eine Vielzahl an Noppen 6 auf. Die hier erkennbare Membranschicht 2 auf der Vorderseite der Strukturplatte 3 ist im unteren Bereich rechtsseitig teilweise transparent dargestellt, sodass der darunterliegende Filtratspalt 5 sowie die Vielzahl an Noppen 6 insoweit sichtbar sind. Die Membranschichten 2 sind mit den Rahmen 4 und den Noppen 6 der Strukturplatte 3 verklebt. Der Rahmen 4 weist im Bereich einer Ecke eine Öffnung 9 auf. Bei Bedarf kann der Rahmen 4 auch an mehreren Stellen solche Öffnungen 9 aufweisen. Öffnungen 9 können beispielsweise dazu verwendet werden, um eine Aufhängung in einer Anwendung wie einem Beutelfilter zu ermöglichen. Sie können auch dazu verwendet werden, bei Aufbau einer Stapel-Anordnung von Filtertaschen 1, wie in einer Filtereinheit, als Durchführung für Gewindestangen zu dienen, wobei jeweils zwischen zwei Filterplatten ein Distanzring angeordnet wird. Damit kann ein definierter Abstand der Filterplatten in einem Bereich insbesondere von 1 bis 10 mm, besonders 4 bis 8 mm, eingestellt werden. Weiterhin ist in Fig. 1 ein schematisch dargestellter Filtratauslass 7 erkennbar. In den Filtratauslass 7 sind beispielsweise von beiden Seiten Filtratflansche 8a und 8b einsetzbar, insbesondere einklebbar (siehe Fig. 6C). Solche Filtratflansche 8a und 8b können unterschiedlich ausgeformt sein. Der Filtratflansch 8a ist zum Endabschluss des Filtratraumes gegen das Rohwasser ausgebildet. Der Filtratflansch 8b weist eine Öffnung auf, so dass ein Anschlussteil, wie beispielsweise das Gehäuse 14 eines Aktivkohlefilters oder ein weiterer Filtratflansch mit Öffnung einer benachbarten Filtertasche 1 im Falle einer Stapel-Anordnung, ein- oder angesetzt werden kann. So kann eine Ausführungsform eines Filtratflansches dazu dienen, bei Bildung einer Stapel-Anordnung eine Filtertasche 1 mit der nächsten so zu verbinden, dass ein durchgängiger Abflusskanal für das Filtrat entsteht, der gegen das Rohwasser hin abgedichtet ist. Durch die Filtratflansche mehrerer Filtertaschen 1 kann ein Rohr geschoben werden, mit dem jeweils an einem oder beiden Enden das Filtrat des Filtertaschenstapels entnommen werden kann.

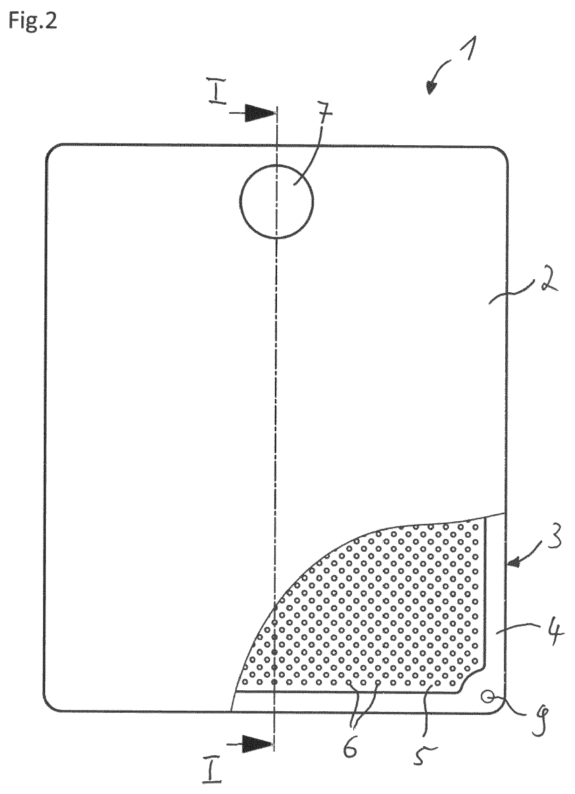

Aus Fig. 2 ergibt sich eine erfindungsgemäße Filtertasche 1 in Aufsicht auf eine. Die Filtertasche 1 weist eine zwischen zwei Membranschichten 2 angeordnete Strukturplatte 3 mit einer Vorder- und einer Rückseite auf. In dieser Darstellung ist lediglich eine der beiden Membranschichten 2 erkennbar, nämlich die auf der Vorderseite der Strukturplatte 3 anliegende. Die Strukturplatte 3 weist im Bereich ihres äußeren Randes auf der Vorder- und der Rückseite einen erhabenen umlaufenden Rahmen 4 auf. In dieser Darstellung ist lediglich der auf der Vorderseite der Strukturplatte 3 befindliche Rahmen 4 erkennbar. Die Membranschicht 2 liegt auf dem Rahmen 4 auf, sodass auf beiden Seiten der Strukturplatte 3 jeweils ein Hohlraum in Form eines flächigen Filtratspalts 5 gebildet ist, der auf der von der Strukturplatte 3 abgewandten Seite jeweils von einer Membranschicht 2 begrenzt wird. Die Strukturplatte 3 weist weiterhin auf der Vorder- und der Rückseite im Bereich innerhalb des Rahmens 4 eine Vielzahl an Noppen 6 auf. Die hier erkennbare Membranschicht 2 auf der Vorderseite der Strukturplatte 3 ist im unteren Bereich rechtsseitig teilweise transparent dargestellt, sodass der darunterliegende Filtratspalt 5 sowie die Vielzahl an Noppen 6 insoweit sichtbar sind. Die Membranschichten 2 sind mit den Rahmen 4 und den Noppen 6 der Strukturplatte 3 verklebt. Der Rahmen 4 weist im Bereich einer Ecke eine Öffnung 9 auf. Bei Bedarf kann der Rahmen 4 auch an mehreren Stellen solche Öffnungen 9 aufweisen. Diese können beispielsweise dazu eingerichtet sein, um bei Aufbau einer Stapel-Anordnung von Filtertaschen 1 in einer Filtereinheit als Durchführung für Gewindestangen zu dienen, wobei vorzugsweise jeweils zwischen zwei Filtertaschen 1 ein Distanzring angeordnet ist. Weiterhin ist in Fig. 2 ein schematisch dargestellter Filtratauslass 7 erkennbar. In den Filtratauslass 7 sind beispielsweise von beiden Seiten Filtratflansche 8a und 8b einsetzbar, insbesondere einklebbar (siehe Fig. 6C).

Man erkennt, dass eine Filtertasche 1 wie in den Fig. 1 und 2 beispielhaft dargestellt, eine ausreichende Klebefläche zur Befestigung der Membranschichten 2 zur Verfügung stellt. Weiterhin gewährleistet ein solcher Aufbau der Filtertasche 1 die freie Querschnittsfläche in Form eines flächenhaften Filtratspalts für das Filtrat möglichst groß zu halten, um damit dynamische Druckverluste zu minimieren. Auch beim Rückspülen ist eine ausreichend starke Verbindung zwischen den Membranschichten 2 und der Strukturplatte 3 gewährleistet.

Man erkennt, dass der Filtratspalt 5 hier einen schmalen Raum bildet, der sich über die flächige Ausdehnung der Strukturplatte 3 erstreckt und an dieser anliegt. Der Filtratspalt 5 wird dabei an seinem äußeren Rand durch den umlaufenden Rahmen 4, genauer gesagt, durch dessen Innenrand, begrenzt. Weiterhin wird der Filtratspalt 5 durch die Strukturplatte 3 auf der einen Seite und der Membranschicht 2 auf der anderen Seite begrenzt. Der Membranspalt 5 erstreckt sich dabei zwischen den Noppen 6 der Strukturplatte 3. Der Raum des Filtratspalts 5 wird hier nur durch die Noppen 6 unterbrochen, also um das Volumen der Vielzahl an Noppen 6 reduziert. Dieser resultierende Raum bildet das Volumen des Filtratspalts 5.

Die Strukturplatte 3 besteht beispielsweise aus einem Kunststoff wie Polypropylen (PP), Polyester, Polystyrol (PS), Polyethylen (PE), Polysulfon, Polyethersulfon (PES), Polyimid, Polyetherimid, Polyamid (PA), Acrylnitril-Butadien-Styrol (ABS), Polyvinylchlorid (PVC), einem Perfluoroalkoxy-Polymer (PFA), fluoriertes Ethylenpropylen (FEP), Polyvinylidenfluorid (PVDF), Polyetheretherketon (PEEK), Polyacrylonitril (PAN) oder Polytetrafluoroethylen (PTFE). Der Polyester kann beispielsweise ein Polyethylenterephthalat (PET), Polybutylenterephthalat (PBT), Polycarbonat (PC) oder ähnliches sein. Der Kunststoff kann bei Bedarf faserverstärkt sein.

Die Strukturplatte 3 ist beispielsweise steif ausgebildet. Letzteres hat den Vorteil, dass die Filtertasche 1 eine gute Gesamtstabilität aufweist.

Man erkennt, dass die Filtertasche 1 einen stabilen, und insbesondere verwindungssteifen, Sandwichverbund bildet, wobei dies im Wesentlichen dadurch erreichbar ist, dass ein solcher Sandwichverbund aus der mit Noppen 6 versehenen Strukturplatte 3, insbesondere einer steifen Strukturplatte 3, und einer beidseitig darauf verklebten Membranschicht 2 hergestellt ist.

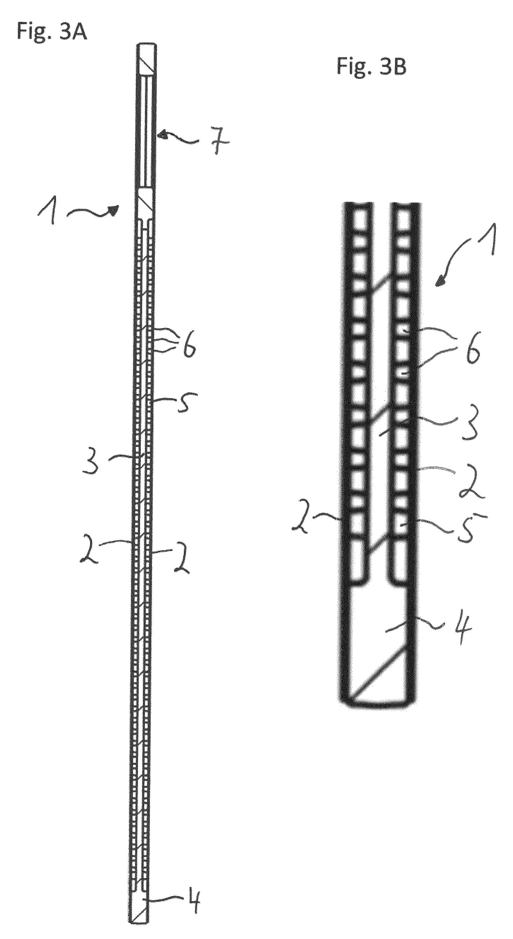

Die Strukturplatte 3 weist bei einer beispielhaften Filtertasche 1 gemäß den Fig. 1 bis 3A und B eine im Wesentlichen eine rechteckige Form auf. Man erkennt, dass die Ecken der Strukturplatte 3 hier abgerundet sein können. Es ist ersichtlich, dass die Schnittebene I-I gemäß Fig. 2 entlang der Längsachse der Filtertasche 1 verläuft.

Aus Fig. 3A und Fig. 3B ist jeweils eine Schnittdarstellung einer erfindungsgemäßen Filtertasche entlang der Schnittebene I-I aus Fig. 2 erkennbar. Dabei zeigt Fig. 3B einen vergrößerten Ausschnitt der Schnittdarstellung. Die Filtertasche 1 in Aufsicht auf eine. Die Filtertasche 1 weist die zwischen zwei Membranschichten 2 angeordnete Strukturplatte 3 mit einer Vorder- und einer Rückseite auf. Die Strukturplatte 3 weist im Bereich ihres äußeren Randes auf der Vorder- und der Rückseite einen erhabenen umlaufenden Rahmen 4 auf. Die Membranschicht 2 liegt jeweils auf dem Rahmen 4 auf, sodass auf beiden Seiten der Strukturplatte 3 jeweils ein Hohlraum in Form eines flächigen Filtratspalts 5 gebildet ist, der auf der von der Strukturplatte 3 abgewandten Seite jeweils von einer Membranschicht 2 begrenzt wird. Die Strukturplatte 3 weist weiterhin auf der Vorder- und der Rückseite im Bereich innerhalb des Rahmens 4 eine Vielzahl an Noppen 6 auf. Die Membranschichten 2 sind mit den Rahmen 4 und den Noppen 6 der Strukturplatte 3 verklebt. Der Klebstoff ist zeichnerisch nicht dargestellt. Weiterhin ist in Fig. 3A der Filtratauslass 7 erkennbar.

Eine ausreichende Klebefläche ergibt sich aus dem zulässigen Rückspüldruck der Filtertasche 1. Bei der Rückspülung wird Filtrat entgegen der Filtrationsrichtung in die Filtertasche 1 hineingedrückt und tritt an der Oberfläche der Membranschichten 2 aus. Dadurch entsteht eine Belastung der Klebefläche mit einer Kraft, die sich aus dem Rückspüldruck und der Membranoberfläche ergibt. Durch die flächenhafte und gleichmäßige Verklebung mit den Noppen 6 ist die volle Rückspülbarkeit der Membranschicht 2 gewährleistet. Für den Betrieb und die Reinigung einer Membranschicht 2 ist dies besonders vorteilhaft, insbesondere da Reinigungschemikalien in situ im laufenden Betrieb intervallartig auf einfache Art eingebracht werden können. Da die Noppen 6 erfindungsgemäß mit den Membranschichten 2 verklebt und nicht verschweißt sind, ist die Gefahr einer Membranschädigung sehr gering. Durch die Verklebung der Noppen 6 mit den Membranschichten 2 wird der Filtratfluss und die aktive Membranfläche nur geringfügig reduziert. Weiterhin haben die Noppen 6 den Vorteil, dass durch deren Verklebung mit den Membranschichten 2 eine Vielzahl, entsprechend der Vielzahl an Noppen 6, von Klebepunkten vorhanden sind, die voneinander unabhängig sind. Sollte, insbesondere während eines Rückspülvorgangs eine einzelne Verklebung einer Noppe 6 mit der Membranschicht 2 sich lösen, hat dies kaum Auswirkungen auf benachbarte Verklebungen von Noppen 6. Dadurch wird eine verbesserte Standzeit erreicht. Die Temperatur kann beim Verkleben, im Gegensatz zum Verschweißen, derart gering gewählt werden, dass die Membranschicht möglichst wenig oder gar nicht geschädigt wird.

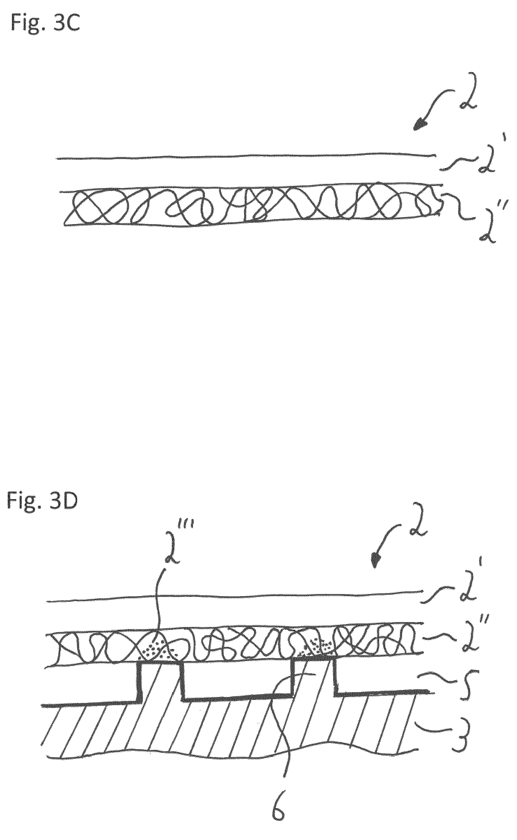

Die Membranschichten 2 sind gemäß der schematischen Darstellung in Fig. 3C Compositstrukturen aufweisend eine aktive Membranschicht 2' sowie eine Vliesschicht 2". Die genannte Vliesschicht 2" besteht beispielsweise aus einem Fasermaterial wie Polysulfon (PSU), Polycarbonat (PC), Acrylnitril-Butadien-Styrol (ABS), Polyethylen (PE), Polypropylen (PP) oder Polyethylenterephthalat (PET) oder Mischungen davon. Die Vliesschicht 2" ist insbesondere als sogenanntes Nonwoven ausgebildet. Sie ist flüssigkeitsdurchlässig, jedenfalls insbesondere für die zu filtrierenden Flüssigkeiten. Die genannte Vliesschicht 2" hat beispielsweise eine Schichtdicke von 0,1 bis 0,5 mm, insbesondere von 0,2 bis 0,3 mm.

Die genannte aktive Membranschicht 2' ist eine Membran aufweisend ein Material ausgewählt aus der Gruppe bestehend aus Polysulfon (PSU), Polyethersulfon (PES), Polyacrylnitril (PAN), einem Cellulosepolymer, Polypropylen (PP), Polyethylen (PE), Polyvinylchlorid (PVC), Polyvinylidenfluorid (PVDF), Polytetrafluoroethylen. Bei der genannten aktiven Membranschicht 2' kann es sich alternativ auch um eine auf einer Vliesschicht aufgebrachte keramische Membran handeln. Eine solche keramische Membran kann wenigstens ein Oxid, ausgewählt aus $Al_2O_3$, $TiO_2$, $ZrO_2$ oder $SiO_2$, aufweisen. Die genannte aktive Membranschicht 2' ist eine zur Filtration geeignete Membranschicht, wie eine Mikrofiltrationsmembran, eine Ultrafiltrationsmembran, eine Nanofiltrationsmembran oder eine Umkehrosmose-Membran.

Die genannte aktive Membranschicht 2' hat Poren mit durchschnittlicher Porengröße zwischen 0,001 $\mu$m und 5 $\mu$m, insbesondere zwischen 0,001 $\mu$m und 5 $\mu$m. Die Porengröße kann beispielsweise nach der "bubble point pore size" Methode bestimmt sein.

Die Vliesschicht 2" ist mit der aktiven Membranschicht 2' in einer dem Fachmann geläufigen Art und Weise verbunden, insbesondere jedoch entweder indem ein die aktive Membranschicht 2' bildendes Polymer flüssig auf das Vlies aufgebracht wird, wie etwa durch einen Phaseninversionsprozess, und dann nach einer Fällung ausgehärtet wird oder indem die aktive Membranschicht 2' und die Vliesschicht 2"zunächst bereitgestellt werden und in einem anschließenden Verfahrensschritt mittels eines wasserdurchlässigen Klebstoffes laminiert werden.

Die Membranschichten 2 der Filtertasche 1 sind, wie in Fig. 3D zu erkennen, mit den Noppen 6 der Strukturplatte 3 insbesondere derart verklebt, dass ein dazu verwendeter Klebstoff 2''' nicht in direktem Kontakt mit der aktiven Membranschicht 2', sondern ausschließlich in Kontakt mit der Vliesschicht 2" der Membranschichten 2 steht. Dadurch wird erreicht, dass die für die Filtration aktive Fläche der aktiven Membranschicht 2' nicht verringert wird. Die Noppen 6 werden mit anderen Worten also vorzugsweise lediglich mit der Vliesschicht 2" der Membranschicht 2 verklebt, sodass die für die Filtration aktive Fläche der aktiven Membranschicht 2' nicht verringert wird. Die Membranschichten 2 sind insbesondere nicht mit den Noppen 6 verschweißt, sondern verklebt. Da der Klebstoff 2''', wie angegeben, vorzugsweise nicht mit der aktiven Membranschicht 2' in Kontakt kommt, also beim Verkleben nicht bis zur aktiven Membranschicht 2' hin in das Gewebe der Vliesschicht 2" eindringt, wird die für die Filtration aktive Membranfläche nicht verringert. Wasser, das oberhalb einer Klebestelle von außen in die Membranschicht 2 eindringt, wird seitlich von der Vliesschicht 2" abgeleitet und kann neben der Verklebung in den Filtratspalt 5 abfließen.

Der Klebstoff 2''' ist ein Hotmelt- oder Lowmelt-Klebstoff, ein reaktiver Schmelzklebstoff, wie beispielsweise aus der Gruppe der Polyurethane oder der Silanterminierten Schmelzklebstoffe, oder ein anderer Kunststoffkleber. Ein Hotmelt-Klebstoff ist ausgewählt aus der Gruppe von Basispolymeren bestehend aus EVA (Ethylenvinylacetat Copolymer), PO (Polyolefin), APAO (Amorphe Poly-$\alpha$-olefine), SBS, SIS (Synthetischer Kautschuk), Polyamid (PA), Polyester (wie PET) und TPU (Thermoplastische Polyurethane). Ein Lowmelt-Klebstoff weist als Basispolymer beispielsweise ein geeignetes EVA (Ethylenvinylacetat Copolymer) auf.

Der Klebstoff 2''' weist eine Verarbeitungstemperatur auf, die zwischen 80°C und 200°C, insbesondere zwischen 120°C und 180°C, liegt. Die Verarbeitungstemperatur des Klebstoffs 2''' liegt vorzugsweise unter der Erweichungstemperatur des Membranmaterials der aktiven Membranschicht 2''.

Der Klebstoff 2''' ist hinsichtlich seiner Viskosität derart ausgewählt, dass beim Klebevorgang des Verklebens der Membranschichten 2 mit den Noppen 6 der Strukturplatte 3 gewährleistet ist, dass der Klebstoff 2''' beim Verkleben zwar in die Vliesschicht 2'' eindringt, aber nicht mit der aktiven Membranschicht 2' in Kontakt kommt. Ein ausreichender Halt der Membranschichten 2 an den Noppen 6 kann damit erreicht werden, ohne dass die für Filtration aktive Membranfläche verringert wird.

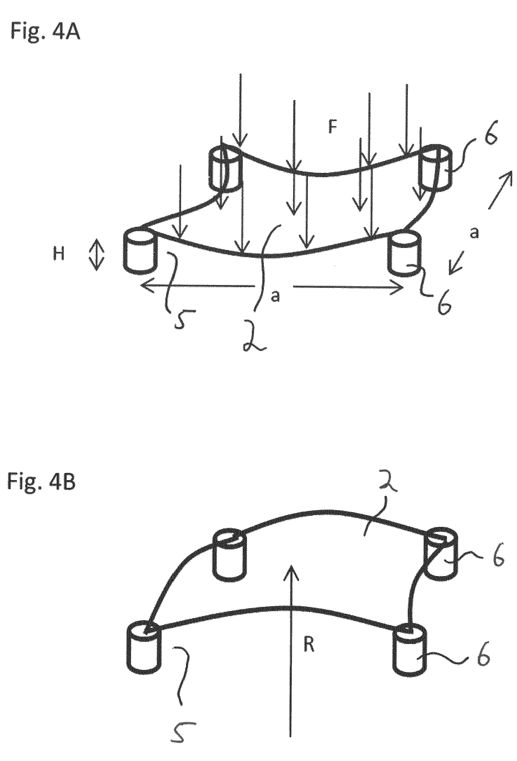

Mit Fig. 4A ist eine schematische Darstellung der Ausrichtung der Noppen 6 auf der hier zeichnerisch nicht dargestellten Strukturplatte 3 mit einer Durchbiegung der Membranschicht 2 bei Beaufschlagung mit einem Filtrationsdruck während der Filtration gezeigt. Das Abstandsraster der Noppen ist erfindungsgemäß so gewählt, dass die Durchbiegung der Membranschicht 2 aufgrund der Beaufschlagung mit dem Filtrationsdruck nicht zu groß wird. Typische Filtrationsdrücke bei der Mikro- und Ultrafiltration sind 0,1 bis 3 m Wassersäule. Das vereinfachte Lastmodell ist in Fig. 4A dargestellt. Die Flächenlast F, auch symbolisiert durch die senkrecht nach unten gerichteten Pfeile, resultiert aus dem Filtrationsdruck p über:

$$F = p \times A, \quad A = a \times a$$

Man erkennt, dass zwei benachbarte Noppen 6 mit der Entfernung a beabstandet sind. Die Durchbiegung kann mit Kenntnis der Materialdaten der Membranschichten 2, insbesondere der aktiven Membranschicht sowie der Vliesschicht, mittels finite Element Methoden berechnet werden. Die Durchbiegung sollte auf maximal 0,5 mm begrenzt werden, damit die Höhe H des Filtratspaltes 5 nicht unzulässig eingeschränkt wird.

Die Höhe H des Filtratspaltes 5, wird wesentlich durch die Höhe H der Noppen bestimmt. Erfindungsgemäß wird eine Minimierung des dynamischen Druckverlustes $\Delta P_{Spalt}$ erreicht. Nach Hagen-Poisseulle gilt:

$$\Delta P_{Spalt} = \frac{12\,\eta\,l\,\bar{v}}{h^2}$$

mit: $\bar{v}$ : mittlere Geschwindigkeit im Filtratspalt 5
$\eta$ : dynamische Viskosität des Wassers bei Filtrationstemperatur
l: Länge des Filtratspalts 5
h: tatsächliche Spalthöhe (= Höhe der Noppen H minus Durchbiegung der Membranschicht 2).

Beispielsweise ergibt die Berechnung für eine Strukturplatte 3 mit einer Fläche von 1 m$^2$ bei einem Flux von 40 l/m$^2$h einen Druckverlust von 1 cm (pro 1 m), berechnet für eine Noppenhöhe von 1,5 mm und 40% freiem Abflussquerschnitt. Damit ist sichergestellt, dass der Filtrationsdruck praktisch konstant über die Membranfläche ist. Würde man die Noppenhöhe auf 0,5 mm verringern, dann betrüge der dynamische Druckverlust 26 cm. Bei einem Filtrationsdruck von 100 cm Wassersäule würde dies bereits einen signifikanten Unterschied der Druckverteilung bewirken.

Der freie Abflussquerschnitt sollte möglichst groß gewählt werden, damit der dynamische Druckverlust im Spalt minimiert wird. Der freie Abflussquerschnitt Q ist der Spaltquerschnitt abzüglich der projizierten Noppenfläche:

$$Q = (h \times b) - (z \times d \times H)$$

h: tatsächliche Spalthöhe
b: Breite der Noppenplatte
z: Anzahl der Noppen
d: Durchmesser der Noppen
H: Höhe der Noppen

Erfindungsgemäß wird durch den Aufbau der Filtertasche 1 und insbesondere durch die Gestaltung der Strukturplatte 3 ein großer freier Abflussquerschnitt erreicht.

Die Strukturplatte 3 weist Noppen 6 mit einem definierten Durchmesser und definierter Belegungsdichte auf. Die Fläche der Strukturplatte $A_{Platte}$ ist l x b, also die Fläche, die durch den Rahmen 4 aufgespannt ist. Die Fläche aller Noppen 6 ist $A_{Noppe}$:

$$A_{Noppe} = \pi \times r^2 \times z \,,$$

wobei r der Radius einer Noppe ist, damit ist die Belegungsdichte B

$$B = \frac{\pi \times r^2 \times z}{l \times b}$$

mit

z: Anzahl der Noppen auf einer Seite der Strukturplatte

r: Radius einer Noppe

l: Länge der Strukturplatte innerhalb des Rahmens

b: Breite der Strukturplatte innerhalb des Rahmens

Beispielsweise hat eine Strukturplatte 3 mit Noppen 6 mit 2 mm Durchmesser, die mit einem Abstand a von 5 mm (Raster 5 x 5 mm, jeweils von Mittelpunkt zu Mittelpunkt einer Noppe) angeordnet sind, eine Belegungsdichte von 12%. Vorzugsweise sollten Belegungsdichten im Bereich von 10 bis 30% liegen.

Man erkennt, dass die Belegungsdichte unabhängig von I und b ist, da mit zunehmender Fläche der Strukturplatte $A_{Platte}$ auch die Anzahl z der Noppen entsprechend zunimmt. Die Belegungsdichte hängt nur vom Rastermaß und dem Durchmesser der Noppen ab.

Nach einer Ausführungsvariante der Strukturplatte 3 beträgt die Belegungsdichte 12 %, wenn I = 250 mm, b = 200 mm, a = 5 mm, Durchmesser Noppen = 2 mm, $A_{Platte}$ = 50.000 mm$^2$ und Anzahl der Noppen = 1932.

Eine schematische Darstellung der Ausrichtung der Noppen auf der Strukturplatte 3 mit einer Ausstülpung der Membranschicht 2 bei Beaufschlagung mit einem Rückspüldruck ist in Fig. 4B gezeigt. Insbesondere bei Beaufschlagung der Membranschicht 2 mit einem Rückspüldruck während eines Rückspülvorgangs ist die Höhe der Klebkraft entscheidend.

Für eine Rückspülung sind typischerweise Drücke im Bereich von 50 cm bis 250 cm Wassersäule erforderlich. Aus dem Rückspüldruck $P_{RSP}$ resultiert eine Kraft R, die kleiner sein muss, als die übertragbare Klebkraft $F_{Kleb}$. Die übertragbare Klebkraft pro Noppe ist ein Materialkennwert, der aus Versuchen bestimmt werden muss. Da die zulässige Klebkraft abhängig ist von der Belegungsdichte der Noppen, darf der Noppendurchmesser und die Noppenanzahl nicht zu klein definiert werden.

Die Formel zur Berechnung der Kraft R lautet:

$$R = P_{RSP} \; x \; A$$

$$A = l \; x \; b$$

Beispielsweise beträgt für eine Filterplatte mit einer Fläche A von 1 m$^2$ bei einem Rückspüldruck von 100 mbar die Kraft R auf die gesamte Fläche 1000 kp (oder ca. 10.000 N). Bei einer Anzahl von 1000 Noppen 6 und einer Klebkraft von 10 N je Noppe könnte also der Rückspüldruck noch aufgenommen werden.

Nach einem weiteren Ausführungsbeispiel der Filtertasche wurde die Filterleistung weiter untersucht.

Diverse Versuche wurden durchgeführt mit einer Noppenplatte, hier exemplarisch mit einer Größe l x b von 250 x 200 mm. Der Noppendurchmesser betrug 2 mm, das Raster für die Anordnung der Noppen war 5 x 5 mm gewählt. Die Belegungsdichte war 12%. Die Membranschicht 2 war mit dem umlaufenden Rahmen 4 der Filterplatte 3 und den Noppen 6 mit einem Hotmelt verklebt. Der Filtrationsdruck betrug 0,1 bar, wobei das zu filtrierende Leitungswasser eine Temperatur von 20°C hatte. Die ermittelte Permeabilität betrug 1800 l/m$^2$hbar. Die Permeabilität ist ein Maß für die Durchlässigkeit der Membran. Wird z.B. ein Durchsatz von 180 l pro m$^2$ und Stunde bei einer treibenden Druckdifferenz von 0,1 bar erzielt, dann beträgt die Permeabilität 1800 l/m$^2$hbar.

Als Vergleichsbeispiel wurde eine wie zuvor beschriebene Filtertasche untersucht, wobei jedoch die Noppen nicht verklebt waren. Es konnte eine Permeabilität von 1800 l/m$^2$hbar festgestellt werden.

Damit zeigt sich, dass die erfindungsgemäße Verklebung der Noppen 6 mit den Membranschichten 2 keinen negativen Einfluss auf den Flux hat.

Weiterhin wurde eine wie zuvor beschriebene Filtertasche untersucht, wobei die Noppen 6 der Strukturplatte 3 wiederum erfindungsgemäß mit den Membranschichten 2 verklebt waren. Die Rückspülfestigkeit wurde mit 10 cm Wassersäule getestet. Dabei trat deutlich sichtbar Filtrat aus den Membranporen aus. Die Verklebung der Noppen blieb über eine Dauer von 30 Minuten intakt. Bei einem Rückspüldruck von 20 cm kam es lediglich vereinzelt zum Versagen der Verklebung an einzelnen Noppen. Für diesen Rückspüldruck müsste daher die Größe der Noppen angepasst werden, beispielsweise auf einen Durchmesser von 2,5 oder 3 mm.

Eine Filtertasche 1 wie in Fig. 1 bis 3A und B exemplarisch dargestellt lässt sich besonders einfach und auch kostengünstig herstellten. Dazu kann bei Bedarf der genannte Klebstoff, insbesondere ein Hotmelt- oder Lowmelt-Klebstoff oder ein anderer Kunststoffkleber, bei einer geeigneten Verarbeitungstemperatur, vorzugsweise zwischen 80 und 150°C, auf die Strukturplatte 3 aufgetragen werden und unmittelbar anschließend wird die Membranschicht 2 aufgelegt. Mit einem leichten Druck kann dann die Membranschicht 2 in den Klebstoff gedrückt werden. Besonders vorteilhaft ist es, zunächst den Klebstoff auf die Strukturplatte 3 aufzutragen und den Klebstoff anschließend erkalten zu lassen. In einem weiteren Schritt kann die Membranschicht 2 auf die Strukturplatte 3, welche mit Klebstoff versehen ist, aufgelegt werden und durch Druck und gleichzeitiges Erwärmen bis zur Erweichungstemperatur des Hotmelt- oder Lowmelt-Klebstoffs, geklebt werden. Durch die Auswahl des Klebstoffes aufweisend eine Verarbeitungstemperatur, die unter, insbesondere deutlich unter, der Erweichungstemperatur der Materialien der Membranschicht 2, insbesondere des Membranmaterials der aktiven Membranschicht, liegt, kann eine Schädigung der Membran ausgeschlossen werden. Für den Fall, dass die Höhe des Rahmens 4 mit der Höhe der Noppen 6 übereinstimmt, ist es besonders einfach, den Klebstoff mit Walzen auf die Strukturplatte 3, also auf den Rahmen 4 und die Noppen 6 aufzutragen und anschließend die Membranschicht 2 mit Rollen anzudrücken.

Man erkennt insbesondere in Fig. 1 und Fig. 2, dass die Noppen 6 auf der Strukturplatte 3 entlang eines Rasters gleichmäßig verteilt sind. Die Noppen 6 weisen beispielsweise die Form eines Zylinders auf. Die Grundfläche, also insbesondere die mit der Membranschicht 2 und/oder dem Klebstoff in Kontakt stehende Fläche der Noppen 6 ist hier eine Kreisfläche. Die Strukturplatte 3 ist einstückig hergestellt. Demnach sind die Noppen 6 und die Rahmen 4 gemeinsam mit der Strukturplatte 3 einstückig hergestellt. Die Strukturplatte 3 ist durch Extrusion hergestellt. Der beidseitig umlaufende Rahmen 4 ist geschlossenen, da er der Abdichtung des Filtratspaltes 5 im äußeren Randbereich dient.

Man erkennt, die Filterplatte 3 neben den Noppen 6 innerhalb des Rahmens 4 keine anderen, insbesondere keine langgestreckten, Strukturen, wie Abstandshalter, Befestigungen, Filtratkanäle oder Ähnliches, aufweist, abgesehen von einer Unterbrechung der Strukturplatte 3 in Form des Filtratauslasses 7. Mit anderen Worten weist der Filtratspalt 5 also abgesehen von den Noppen 6 und von Strukturen des Filtratauslasses 7 keine anderen Strukturen innerhalb des Rahmens 4 auf.

Die mit der Membranschicht 2 verklebte Oberfläche einer einzelnen Noppe 6 beträgt 0,5 bis 50 mm$^2$, insbesondere 1 bis 20 mm$^2$. Damit kann zum einen eingestellt werden, welche Klebkraft entsprechend der zu verklebenden Oberfläche übertragen werden kann und zum anderen, welche freie Fläche für das Filtrat zur Verfügung steht, um möglichst druckverlustfrei zum Filtratauslass 7 zu gelangen. Je kleiner die mit der Membranschicht 2 zu verklebende Oberfläche einer einzelnen Noppe 6 ist, also je kleiner die Grundfläche einer einzelnen Noppe 6 ist, umso größer ist das Volumen des Filtratspalts 5, also umso größer ist die freie Querschnittsfläche im Filtratspalt 5. Der Vorteil von großen freien Querschnittsflächen im Filtratspalt 5 ist ein geringer dynamischer Druckverlust auf der Filtratseite. Ein hoher dynamischer Druckverlust ist demgegenüber von Nachteil, da ein solcher zur Notwendingkeit von höheren Filtrationsdrücken auf der Rohwasserseite führt, damit der gleiche TMP (transmembrane pressure) erzielt wird. Mit höheren Filtrationsdrücken erhöht sich aber gleichzeitig die Kraft, mit der beispielsweise Partikel oder Belebtschlamm gegen die Membranschicht 2 gedrückt werden. Da typische Anwendungen der Filtertasche 1 im Bereich der Membranbioreaktoren oder Oberflächenwasserfiltration liegen, ist eine möglichst wenig komprimierte Deckschicht entscheidend für den Reinigungserfolg. Eine solche Deckschicht entsteht bei der Filtration durch Anlagerung von Partikeln auf der Membran. Die dargestellte Anordnung der Noppen 6 auf der Strukturplatte 3 ermöglicht, dass die durch eine Scherströmung (Cross Flow oder Semi-Cross Flow) an der Membranschicht 2 erzielten Kräfte quer zur Membranoberfläche größer sind, als die Adhäsionskräfte, die beispielsweise Partikel oder Belebtschlamm an die Membranschicht 2, insbesondere die aktive Membranschicht, binden.

Die Höhe der Noppen 6 beträgt beispielsweise zwischen 0,3 und 15 mm, insbesondere zwischen 0,5 und 5 mm. Über die Höhe der Noppen 6 der Strukturplatte 3 lässt sich in vorteilhafter Weise die Höhe des flächigen Filtratspaltes 5 einstellen. In diesem Spalt zwischen Strukturplatte 3 und der an dem Rahmen 4 und den Noppen 6 anliegenden Membranschicht 2, also in dem Filtratspalt 5, bildet sich nach Hagen-Poisseulle eine laminare Strömung aus. Durch die genannte Höhe des Filtratspaltes 5 kann der dynamische Druckverlust wirksam begrenzt werden. Bei einer beispielhaften Höhe des Filtratspaltes 5 von etwa 1,5 mm kann der dynamische Druckverlust im Filtratspalt 5 der Filtertasche 1 auf ca. 1 cm begrenzt werden, selbst wenn die Strukturplatte eine Ausdehnung in der Fläche, insbesondere eine Länge, von etwa 1 m aufweist. Die genannte Höhe der Noppen 6 ist auch in Bezug auf einen weiteren Aspekt von Bedeutung: Abhängig von der Höhe der Noppen 6 werden bei einer gegebenenfalls erfolgenden Biegebeanspruchung der Strukturplatte 3 Zugkräfte in die Membranschichten 2, insbesondere in eine der beiden Membranschichten 2, eingeleitet. Eine Membranschicht 2 kann Zugkräfte übertragen. Im Verbund mit der Strukturplatte 3 wird auf diese Weise eine stabile, verwindungssteife Sandwichkonstruktion erzielt. Die Noppen 6 mit der angegebenen Höhe bewirken eine hohe Biegesteifigkeit der Strukturplatte 3.

Die Filtertasche 1 wird typischerweise in Membranbioreaktoren oder zur Filtration von Oberflächenwasser eingesetzt. Da im Rohwasser u.a. hohe Schlamm- oder Partikelkonzentrationen anzutreffen sind, ist es vorteilhaft, wenn offene Rohwasser-Kanäle zwischen verschiedenen Filtertaschen 1 im Betrieb eine gleichbleibende geometrische Form aufweisen. Dadurch können die zur Reinigung aufgebrachten Cross-Flow oder Semi-Cross-Flow (mit Luftblasenspülung) Strömungen besonders effizient zur Reinigung eingesetzt werden. Beispielsweise hat es sich als vorteilhaft erwiesen, wenn bei einem Filtertaschenabstand zwischen zwei benachbarten Filtertaschen von ca. 6 mm eine Luftblase mit einer Größe von 8 bis 10 mm eingesetzt wird und eine sogenannte Pfropfenströmung (slug flow) erzielt wird. Die Wirksamkeit dieses Effektes ist abhängig von der Geometrie der Filtertasche 1 und des dazwischen befindlichen Spaltes. Die hier exemplarisch gezeigten Filtertaschen 1 weisen eine ausreichende Stabilität auf, damit sie sich im Betrieb bei Anordnung benachbarter Filtertaschen 1 nicht berühren und sich zwei benachbarte Membranschichten 2 zweier benachbarter Filtertaschen 1 gegeneinander ansaugen.

Gemäß den Fig. 1 bis 3A und B weist die Strukturplatte 3 im Bereich ihres äußeren Randes auf der Vorder- und der Rückseite einen erhabenen umlaufenden Rahmen 4 mit einer Höhe zwischen 0,3 und 15 mm, insbesondere zwischen 0,5 und 5 mm auf. Die Höhe des Rahmens 4 ist hier identisch zur Höhe der Noppen 6 der Strukturplatte 3. Dies ermöglicht ein besonders einfaches Verkleben der Membranschichten 2 an der Strukturplatte 3.

Bei einer exemplarischen Filtertasche 1 wurde die Membranschicht 2 vor der Verklebung mit der Strukturplatte 3 im Bereich ihres äußeren Randes, insbesondere entlang einer umlaufenden Schweißnaht, verschweißt. Dies kann beispielsweise im einfachsten Fall mit Hilfe eines Folienschweißgerätes erfolgen. Dabei wird, vorzugsweise ausschließlich, das Vlies der Vliesschicht 2" verschmolzen. Anschließend wird die so vorbehandelte Membranschicht 2 auf die Strukturplatte 3 aufgeklebt. Auf diese Weise wird erreicht, dass keine Querströmung des Filtrates im Bereich der Schweißnaht mehr auftreten kann. Eine vollständige Abdichtung des Filtratspalts 5 wird erreicht. Anders als bei der Verbindung durch Verkleben, insbesondere punktförmigen Verbindung, der Noppen 6 mit der daran anliegenden Membranschicht 2, ist bei der Verbindung des Rahmens 4 mit der Membranschicht 2 nicht erwünscht, dass Flüssigkeit, die oberhalb einer Klebestelle in die Membranschicht 2 eindringt, seitlich von der Vliesschicht abgeleitet wird und neben der Verklebung in den Filtratspalt 5 abfließen kann. Insbesondere sollte verhindert werden, dass Flüssigkeit von außen in den Filtratspalt 5 gelangt, ohne die Membranschicht 2 zu passieren. Die Flüssigkeit darf nicht ausschließlich durch die Vliesschicht der Membranschicht 2 von außen in den Filtratspalt 5 gelangen. Entsprechendes gilt umgekehrt während eines Rückspülvorgangs. Dies kann wirksam durch das zusätzliche Verschweißen der Membranschicht 2 mit dem umlaufenden Rand 4 erreicht werden. Damit werden sowohl die Vliesschicht als auch die aktive Membranschicht im Bereich der Schweißnaht verschlossen.

Denkbar ist auch eine Verschweißung der Membranschicht 2 mit dem Rahmen 4 mit oder ohne zuvor erfolgter separater Verschweißung der Membranschicht 2.

Trinkwasser kann mit Hilfe einer in den Figuren 1 bis 3A und B dargestellten Filtertasche 1 beispielsweise nach folgendem Verfahren bereitgestellt werden. Ein solches Verfahren zur Bereitstellung von Trinkwasser durch Aufreinigung von Rohwasser umfasst die Schritte:

  a) Bereitstellen von aufzureinigendem Rohwasser,
  b) Filtration des Rohwassers mit Hilfe einer Filtertasche 1, indem das Rohwasser durch die Membranschichten 2 hindurch in die Filtratspalten 5 geleitet wird und das gefilterte Wasser die Filtertasche 1 durch mindestens einen Filtratauslass 7 verlässt.

Das Verfahren kann durch weitere Aufreinigungsschritte optional ergänzt werden. So kann gegebenenfalls anschließend an Schritt b) in einem Schritt c) eine weitere Aufreinigung des in Schritt b) erhaltenen gefilterten Wassers mit Hilfe eines Aktiv-Kohle-Filters erfolgen und in einem weiter optionalen Schritt d) anschließend eine weitere Aufreinigung des in Schritt c) erhaltenen gefilterten Wassers mit Hilfe einer sich von b) und c) unterscheidenden weiteren Aufreinigungsmethode erfolgen.

Für die genannten Verfahren zur Bereitstellung von Trinkwasser durch Aufreinigung von Rohwasser werden die Filtertaschen 1 in aufzureinigendes Rohwasser eingetaucht oder in einer dazu geeigneten Vorrichtung von aufzureinigendem Rohwasser umspült. Im Reinigungsbetrieb wird dann das Rohwasser mit Hilfe eines Drucks von außen durch die Membranschichten 2 in das Innere der Filtertasche 1, nämlich in den Filtratspalt 5, gedrückt und dabei filtriert. Das Filtrat verlässt die Filtertasche über einen Filtratauslass 7. Von dort aus kann das Filtrat weitergeleitet und/oder gesammelt werden. Weitere Aufreinigungsschritte können sich bei Bedarf anschließen.

Für die genannten Verfahren zur Bereitstellung von Trinkwasser durch Aufreinigung von Rohwasser kommt insbesondere eine Filtereinheit zum Einsatz, welche mindestens zwei Filtertaschen 1 aufweist, wobei die Filtertaschen 1 in einer Stapel-Anordnung vorgesehen sind und zwischen den Filtertaschen 1 ein Spalt ausgebildet ist. Erfindungsgemäße Filtereinheiten werden beispielsweise in Membranbioreaktoren oder zur Filtration von Oberflächenwasser eingesetzt. Da im Rohwasser u.a. hohe Schlamm- oder Partikelkonzentrationen anzutreffen sind, ist es vorteilhaft, wenn offene Rohwasser-Kanäle zwischen verschiedenen Filtertaschen 1 einer Filtereinheit im Betrieb eine gleichbleibende geometrische Form aufweisen. Dies wird durch die formstabilen Filtertaschen 1 erreicht. Dadurch können die zur Reinigung einer Filtereinheit aufgebrachten Cross-Flow oder Semi-Cross-Flow (mit Luftblasenspülung) Strömungen besonders effizient zur Reinigung eingesetzt werden. Der Abstand zwischen zwei benachbarten Filtertaschen 1 beträgt beispielsweise 1 bis 50 mm, insbesondere 2 bis 30 mm, bevorzugt 4 bis 10 mm. Beispielsweise kann bei einem Filtertaschenabstand zwischen zwei benachbarten Filtertaschen 1 von ca. 6 mm eine Luftblase mit einer Größe von 8 bis 10 mm eingesetzt werden und eine sogenannte Pfropfenströmung (slug flow) erzielt werden. Die Wirksamkeit dieses Effektes ist auch gewährleistet durch die definierte Geometrie der Filtertasche 1 und des dazwischen befindlichen Spaltes. Weiterhin weisen die Filtertaschen 1 eine genügende Stabilität auf, sodass sie sich im Betrieb bei Anordnung benachbarter Filtertaschen 1 nicht berühren und sich zwei benachbarte Membranschichten 2 zweier benachbarter Filtertaschen 1 gegeneinander ansaugen.

Die Filtertaschen 1 der genannten Filtereinheit können in ein starres Gehäuse eines Filtermoduls parallel zueinander eingesetzt sein. Ein solches Filtermodul weist mindestens eine Filtereinheit auf. Das starre Gehäuse kann aus Metall oder einem Kunststoff gefertigt sein. Die Filtertaschen 1 sind in das starre Gehäuse einschiebbar und/oder einsteckbar. Das Gehäuse weist dazu geeignete Schienen und/oder Steckvorrichtungen auf. Die Filtertaschen 1 werden im Betrieb von im Gehäuse einleitbarem Rohwasser umspült. Das Gehäuse weist vorzugsweise eine Einlassöffnung für aufzureinigendes Rohwasser auf. Die Filtertaschen 1 sind filtratseitig, insbesondere über steckbare, erforderlichenfalls mit O-Ringen versehene, Filtratflansche, miteinander verbunden. Das Filtrat kann das Gehäuse über wenigstens eine Auslassöffnung verlassen, wozu beispielsweise ein geschlitztes Rohr oder ähnliches durch die Filtratflansche gesteckt und das geschlitzte Rohr mit der Auslassöffnung verbunden ist.

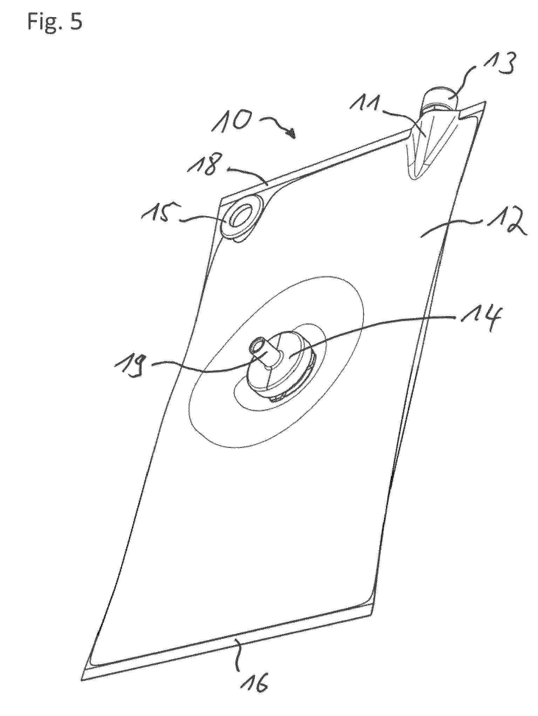

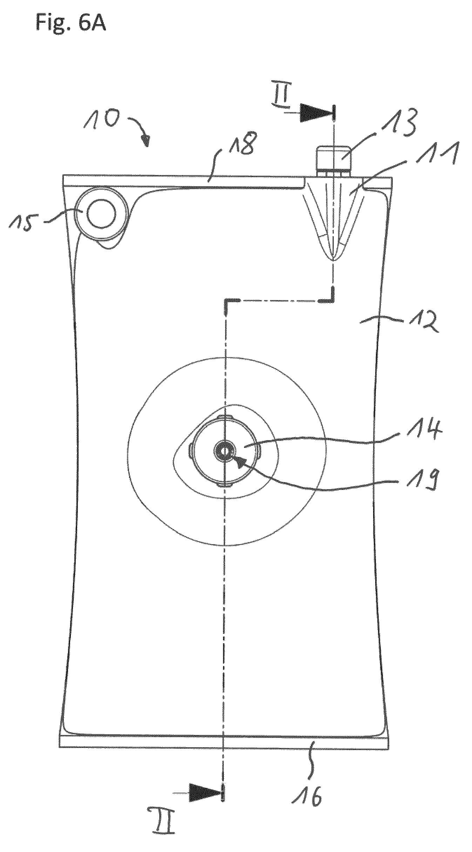

Gemäß Fig. 5 und Fig. 6A ist ein Beutelfilter 10, insbesondere Schlauchbeutelfilter, zur Bereitstellung von Trinkwasser durch Aufreinigung von Rohwasser gezeigt, wobei der Beutelfilter 10 in einem oberen Bereich 18 einen Zulauf 11 zur Befüllung mit Rohwasser aufweist. Der Beutelfilter 10 wird durch eine dünne, insbesondere schlauchförmige, Folie 12 gebildet. Die Folie besteht beispielsweise aus PE, PP, PET, OPA (orientiertes Polyamid), PA, OPP (orientiertes PP) oder PTFE (Polytetrafluorethylen). Im Inneren des Beutelfilters 10 ist eine hier zeichnerisch nicht dargestellte Filtertasche 1 angeordnet. Wie in Fig. 6C zu erkennen ist, ist der Filtratauslass 7 der Filtertasche 1 ist mittels Filtratflanschen 8a und 8b mit einem Gehäuse 14 für einen Aktivkohlefilter 21 verbunden, welches aus den Gehäusehälften 17a und 17b gebildet wird. Das Filtrat läuft vom Filtratauslass 7 durch den Aktivkohlefilter 21 zu einem an der Gehäusehälfte 17b vorgesehenen Auslass 19. Der Auslass 19 kann mit einem Ventil, einer Kappe oder ähnlichem bei Bedarf verschlossen werden. Die Folie 12 ist auf jeder Seite kreisförmig mit dem Filtratflansch 8a bzw. 8b verschweißt. So werden Einziehungen im Beutelfilter 10 gebildet. Andernfalls würde sich der Beutelfilter 10 beim Befüllen soweit aufdehnen, dass der Aktivkohlefilter nicht mehr ansteckbar wäre. Die Filtratflansche 8a und 8b weisen innerhalb ihres inneren Umfangs zeichnerisch nicht dargestellte geeignete Öffnungen auf oder sind gegeneinander geringfügig beabstandet, sodass das Filtrat durch die Filtratflansche 8a und 8b hindurch die Filtertasche 1 verlassen kann. Mit anderen Worten ermöglicht die Bauweise der Filtratflansche 8a und 8b einen Austritt des Filtrats aus der Filtertasche 1 in einen durch die Filtratflansche gebildeten Hohlraum. Bei den Öffnungen handelt es sich beispielsweise um Bohrungen oder Schlitze und ähnliches.

Wenn der Beutelfilter 10 über den Zulauf 11 befüllt wurde, kann das eingefüllte Rohwasser aus dem Inneren des Beutelfilters 10 in das Innere der Filtertasche 1, also in die beiden Filtratspalten 5 der Filtertasche 1, fließen. Dazu wird der Beutelfilter 10 im einfachsten Fall nach Befüllung auf eine Auflage gestellt. Es handelt sich dann um einen Standbodenbeutelfilter. Dies ist beispielsweise dadurch möglich, dass sich die Folie 12 nach Befüllung mit Rohwasser im unteren Bereich 16 des Beutelfilters 10 in der Form aufstellt, dass sich ein Boden bildet, wie er von üblichen Schlauchbeuteln, wie im Lebensmittelverpackungsbereich, bekannt ist. Alternativ oder zusätzlich kann der Beutelfilter 10 durch ein Zusammenpressen bedient werden, sodass eingefülltes Rohwasser aus dem Inneren des Beutelfilters 10 in das Innere der Filtertasche 1, also in die beiden Filtratspalten 5 der Filtertasche 1, gedrückt wird. Nach einer weiteren Alternative ist der Beutelfilter 10 als Hängebeutel ausgebildet, wozu insbesondere eine Aufhängung 15 im oberen Bereich 18 des Beutelfilters 10 vorgesehen ist. Insbesondere bei Ausführung des Beutelfilters 10 als Standbodenbeutel oder als Hängebeutel bewirkt die zwischen dem Zulauf 11 oder dem oberen Bereich 18 des Beutelfilters 10 und dem Auslass 14 oder dem Filtratauslass 7 stehende Wassersäule bereits allein, dass Rohwasser in die Filtertasche 1 gedrückt wird.

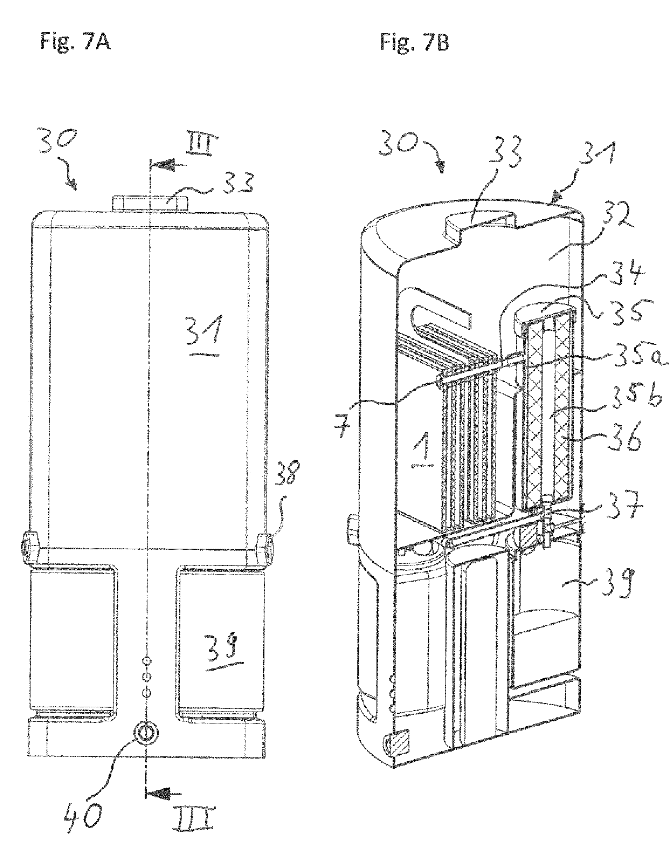

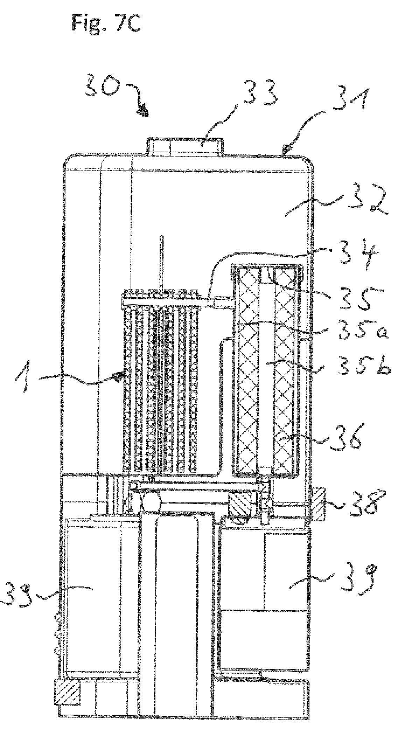

Gemäß Fig. 6B und Fig. 6C ist ein Beutelfilter 10, insbesondere Schlauchbeutelfilter, zur Bereitstellung von Trinkwasser durch Aufreinigung von Rohwasser gezeigt, wobei der Beutelfilter 10 einen Zulauf 11 zur Befüllung mit Rohwasser aufweist. Der Beutelfilter 10 wird durch eine dünne, insbesondere schlauchförmige, Folie 12 gebildet. Im Inneren des Beutelfilters 10 befindet sich eine Filtertasche 1. Wie in Fig. 6B zu erkennen ist, erstreckt sich die Filtertasche 1 über die untere Hälfte des Beutelfilters 10. Der Filtratauslass 7 befindet sich am oberen Ende der Filtertasche 1. Insbesondere in Fig. 7C ist wiederum zu erkennen, dass die Filtertasche 1 die auf beiden Seiten aufgeklebten Membranschichten 2 auf der Strukturplatte 3 aufweist, sodass die beiden Filtratspalten 5 gebildet werden. Der Filtratauslass 7 ist mittels Filtratflanschen 8a und 8b mit einem Gehäuse 14 für einen Aktivkohlefilter 21 verbunden, welches aus den Gehäusehälften 17a und 17b gebildet wird. Das Filtrat läuft vom Filtratauslass 7 durch den Aktivkohlefilter 21 zu einem an der Gehäusehälfte 17b vorgesehenen Auslass 19. Der Auslass 19 kann mit einem Ventil, einer Kappe oder ähnlichem bei Bedarf verschlossen werden. Durch den Auslass 19 kann das Filtrat den Beutelfilter 10 verlassen. Der Auslass 19 kann mit einem Ventil, einer Kappe oder ähnlichem bei Bedarf verschlossen werden. Dichtungsringe 20 können bei Bedarf vorhanden sein. In den Gehäusehälften 17a und 17b befindet sich ein Aktivkohlefilter 21.

Das Rohwasser kann über den Zulauf 11 in den Beutelfilter 10 gelangen und gelangt zunächst in den Raum zwischen den Folien 12 und der Filtertasche 1. Wenn der Beutelfilter 10 über den Zulauf 11 befüllt wurde, kann das eingefüllte Rohwasser aus dem Inneren des Beutelfilters 10 in das Innere der Filtertasche 1, also in die beiden Filtratspalten 5 der Filtertasche 1, wie bereit beschrieben, gelangen und dabei filtriert werden. Das Filtrat verlässt die Filtertasche 1 über den Filtratauslass 7 sowie den daran befestigten Anschluss 14. Ggf. wird das Filtrat in einem weiteren Schritt durch einen Aktivkohlefilter 21 gefiltert bevor es den Beutelfilter 10 durch den Auslass 17 verlässt.

Die Filtratflansche 8a und 8b können je nach Bedarf unterschiedlichste Ausformungen aufweisen. Der Filtratflansch 8a zeigt bildet hier einen Endabschluss des Filtratraumes gegen das Rohwasser. Der Filtratflansch 8b weist hier eine Form mit Öffnung auf, sodass das Gehäuse 14 für einen Aktivkohlefilter 21, welches aus den Gehäusehälften 17a und 17b gebildet ist, anschließbar ist. Das Gehäuse 14 kann mit O-Ring eingesetzt werden.

Die Filtertasche 1 kann weiterhin in einem Filtergerät eingesetzt werden. Ein solches Filtergerät ist in Fig. 7A bis C exemplarisch dargestellt. Demnach weist ein Filtergerät 30 folgende Elemente auf:

- einen Behälter 31 zur Aufnahme von Rohwasser,
- wenigstens eine in dem genannten Behälter 31 angeordnete Filtertasche 1,
- wobei der Behälter 31 zur Aufnahme von Rohwasser und die Filtertasche 1 in der Art zueinander angeordnet sind, dass das Wasser allein durch die Wirkung eines geostatischen Druckgefälles durch die wenigstens eine Filtertasche 1 filtrierbar ist, also in den Filtratspalt 5 gedrückt wird,
- ein an die wenigstens eine Filtertasche 1 nachgeschaltetes Gehäuse 35 eines Aktivkohlefilters,
- einen an das Gehäuse 35 eines Aktivkohlefilters nachgeschalteten Verteilerblock 37 geeignet zur Aufteilung von filtriertem Wasser auf einzeln aus dem Filtergerät 30, nach Verschließen eines Absperrventils 38, entnehmbare Flaschen 39.

Im Folgenden wird die Funktionsweise eines Filtergerät 30 exemplarisch erläutert: Der Behälter 31 wird mit einem Rohwasser befüllt, indem über einen Einlass 33 der Hohlraum 32 des Behälters 31 befüllt wird. Dadurch befinden sich die Filtertaschen 1 in der aufzureinigenden Flüssigkeit. Das hier gezeigte Filtergerät 30 weist eine Mehrzahl an Filtertaschen 1 auf. Diese Filtertaschen 1 sind parallel zueinander in Sandwich-Anordnung vorgesehen und bilden eine Filtereinheit. Die Filtratabzüge 7 der Filtertaschen 1 sind über eine Verbindungsleitung 34, beispielsweise ein Kunststoffrohr, miteinander flüssigkeitsdurchströmbar verbunden. Bei Bildung einer solchen Stapel-Anordnung ist eine Filtertasche 1 mit der nächsten so verbunden, dass ein durchgängiger Abflusskanal, hier die Verbindungsleitung 34, für das Filtrat entsteht, der gegen das Rohwasser hin abgedichtet ist. Durch die Filtratflansche mehrerer Filtertaschen 1 ist die Verbindungsleitung 34 in der Form eines Rohres, insbesondere aufweisend geeignete Öffnungen, wie Schlitze, im Bereich der Filtratflansche 8a und 8b, geschoben, mit dem an einem Ende das Filtrat des Filtertaschenstapels entnommen werden kann. In das Gehäuse 35 des Aktivkohlefilters ist eine Patrone 36 eines Aktivkohlefilters, also eine Aktivkohlefilter-Patrone, eingesetzt.

Man erkennt, dass die Filtertaschen 1 insbesondere im unteren Bereich des Hohlraums 32 des Behälters 31 angeordnet sind, sodass die Wassersäule des Rohwassers ausreichend Druck zur Verfügung stellt, um das Rohwasser in den Innenraum der Filtertaschen 1 zu drücken. Bei Bedarf können auch Hilfsmittel, wie Pumpen und ähnliches alternativ oder zusätzlich dazu vorgesehen sein. Das Filtrat verlässt die Filtertaschen 1 durch die Filtratabzüge 7 und die Verbindungsleitung 34. Die Verbindungsleitung 34 mündet in das Gehäuse 35 eines Aktivkohlefilters. Vom Außenbereich 35a des Gehäuses 35 fließt das Filtrat radial durch die Patrone des Aktivkohlefilters 36. Im Inneren der Patrone 36 befindet sich ein Abflussraum 35b für das Aktivkohle-behandelte Wasser. Am Boden des Gehäuses 35 des Aktivkohlefilters schließt sich ein Verteilerblock 37 an, der geeignet ist zur Aufteilung von filtriertem Wasser auf einzeln aus dem Filtergerät 30, nach Verschließen eines Absperrventils 38, entnehmbare Flaschen 39. Das Filtergerät 30 weist hier in diesem Ausführungsbeispiel drei Flaschen 39 auf. Bei Bedarf können geeignete Bedien- und/oder Anzeigeelemente 40 vorhanden sein. Das Filtergerät 30 kann in besonders vorteilhafter Weise unter alleiniger Ausnutzung des geostatischen Druckgefälles zur Aufreinigung von Rohwasser genutzt werden. Die einzelne Entnahme der Flaschen 39 ermöglicht die bedarfsgerechte Bereitstellung des filtrierten Wassers. Solange das Wasser, wie Trinkwasser, nicht benötigt wird, kann es in den Flaschen im Filtergerät 30 geschützt verbleiben.

Die hier beschriebenen Filtertaschen werden insbesondere zur Aufreinigung von Flüssigkeiten in einem Membranbioreaktor oder zur Oberflächenwasserfiltration zur Aufreinigung von Flüssigkeiten verwendet.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | |
|---|---|
| 1 | Filtertasche |
| 2 | Membranschicht |
| 2' | aktive Membranschicht |
| 2" | Vliesschicht |
| 2"' | Klebstoff |
| 3 | Strukturplatte |
| 4 | Rahmen |
| 5 | Filtratspalt |
| 6 | Noppen |
| 7 | Filtratauslass |
| 8a,b | Filtratflansche |
| 9 | Öffnung |
| 10 | Beutelfilter |
| 11 | Zulauf |
| 12 | Folie |
| 13 | Verschluss |

| 14 | Gehäuse eines Aktivkohlefilters |
| 15 | Aufhängung |
| 16 | unterer Bereich des Beutelfilters |
| 17a,b | Gehäuseteile |
| 18 | oberer Bereich des Beutelfilters |
| 19 | Auslass |
| 20 | Dichtung |
| 21 | Aktivkohlefilter |
| 30 | Filtergerät |
| 31 | Behälter zur Aufnahme von Rohwasser |
| 32 | Hohlraum |
| 33 | Einlass |
| 34 | Verbindungsleitung |
| 35 | Gehäuse eines Aktivkohlefilters |
| 35a | Außenbereich des Gehäuses |
| 35b | Abflussraum |
| 36 | Patrone des Aktivkohlefilters |
| 37 | Verteilerblock |
| 38 | Absperrventil |
| 39 | Flasche |
| 40 | Bedien- und/oder Anzeigeelemente |

**Patentansprüche**

1. Filtertasche (1) aufweisend eine zwischen zwei Membranschichten (2) angeordnete Strukturplatte (3) mit einer Vorder- und einer Rückseite, wobei die Strukturplatte (3) im Bereich ihres äußeren Randes auf der Vorder- und der Rückseite einen erhabenen umlaufenden Rahmen (4) aufweist, an dem jeweils eine Membranschicht (2) anliegt, sodass auf beiden Seiten der Strukturplatte (3) jeweils ein Hohlraum in Form eines flächigen Filtratspalts (5) gebildet ist, der auf der von der Strukturplatte (3) abgewandten Seite jeweils von einer Membranschicht (2) begrenzt wird, und die Strukturplatte (3) einen Filtratauslass (7) aufweist, **dadurch gekennzeichnet, dass** die Strukturplatte (3) auf der Vorder- und der Rückseite im Bereich innerhalb des Rahmens (4) eine Vielzahl an Noppen (6) aufweist und die Membranschichten (2) mit den Noppen (6) der Strukturplatte (3) verklebt sind.

2. Filtertasche (1) nach Anspruch 1, **dadurch gekennzeichnet, dass** die Membranschichten (2) jeweils eine Vliesschicht (2") und eine aktive Membranschicht (2') aufweisen, wobei die Vliesschicht (2") jeweils in das Innere des Filtratspalts (5) weist und die aktive Membranschicht (2') jeweils nach außen weist und eine äußere Begrenzung der Filtertasche (1) bildet.

3. Filtertasche (1) nach Anspruch 1 oder 2, **dadurch gekennzeichnet, dass** die Membranschichten (2) auch mit den Rahmen (4) der Strukturplatte (3) verklebt sind.

4. Filtertasche (1) nach wenigstens einem der vorhergehenden Ansprüche, **dadurch gekennzeichnet, dass** die Membranschichten (2) mit den Rahmen (4) und den Noppen (6) der Strukturplatte (3) derart verklebt sind, dass ein dazu verwendeter Klebstoff (2''') nicht in direktem Kontakt mit der aktiven Membranschicht (2'), sondern ausschließlich in Kontakt mit der Vliesschicht (2") der Membranschichten (2) steht.

5. Filtertasche (1) nach wenigstens einem der vorhergehenden Ansprüche, **dadurch gekennzeichnet, dass** der Klebstoff (2''') ein Hotmelt- oder Lowmelt-Klebstoff oder ein anderer Kunststoffkleber ist und vorzugsweise eine Verarbeitungstemperatur, insbesondere zwischen 80°C und 200°C, aufweist, die unter der Erweichungstemperatur des Membranmaterials der aktiven Membranschicht (2') liegt.

6. Filtertasche (1) nach wenigstens einem der vorhergehenden Ansprüche, **dadurch gekennzeichnet, dass** die Noppen (6) auf der Vorder- und der Rückseite der Strukturplatte (3) entlang eines Rasters gleichmäßig verteilt sind und vorzugsweise die Form eines Prismas oder eine zylindrische Form aufweisen.

7. Filtertasche (1) nach wenigstens einem der vorhergehenden Ansprüche, **dadurch gekennzeichnet, dass** die Noppen (6) in der Art auf der Vorder- und der Rückseite der Strukturplatte (3) entlang eines Rasters gleichmäßig verteilt sind, dass die Belegungsdichte B der Strukturplatte (3) mit Noppen (6) innerhalb des Rahmens (4) zwischen 10 bis 30%, vorzugsweise zwischen 10 bis 20%, beträgt.

8. Filtertasche (1) nach wenigstens einem der vorhergehenden Ansprüche, **dadurch gekennzeichnet, dass** die Strukturplatte (3) einstückig, insbesondere durch Extrusion, hergestellt und vorzugsweise aus einem Material gefertigt ist, das ausgewählt ist aus der Gruppe bestehend aus Polypropylen (PP), Polyester, Polystyrol (PS), Polyethylen (PE), Polysulfon, Polyethersulfon (PES), Polyimid, Polyetherimid, Polyamid (PA), Acrylnitril-Butadien-Styrol (ABS), Polyvinylchlorid (PVC), ein Perfluoroalkoxy-Polymer (PFA), fluoriertes Ethylenpropylen (FEP), Polyvinylidenfluorid (PVDF), Polyetheretherketon (PEEK), Polyacrylnitril (PAN) und Polytetrafluoroethylen (PTFE), wobei das Material optional faserverstärkt ist.

9. Filtertasche (1) nach wenigstens einem der vorhergehenden Ansprüche, **dadurch gekennzeichnet, dass** die Höhe der Noppen (6) in einem Bereich zwischen 0,3 bis 15 mm und/oder die mit der Membranschicht (2) verklebte Oberfläche einer einzelnen Noppe (6) in einem Bereich zwischen 0,5 bis 50 mm$^2$

liegt.

10. Verfahren zur Bereitstellung von Trinkwasser durch Aufreinigung von Rohwasser umfassend die Schritte:

a) Bereitstellen von aufzureinigendem Rohwasser,
b) Filtration des Rohwassers mit Hilfe einer Filtertasche (1) gemäß einem der Ansprüche 1 bis 9, indem das Rohwasser durch die Membranschichten (2), aufweisend insbesondere eine Ultrafiltrationsmembran, hindurch in die Filtratspalten (5) geleitet wird und das gefilterte Wasser die Filtertasche (1) durch mindestens einen Filtratauslass (7) verlässt,
c) gegebenenfalls anschließende weitere Aufreinigung des in Schritt b) erhaltenen gefilterten Wassers mit Hilfe eines Aktiv-Kohle-Filters und
d) gegebenenfalls anschließende weitere Aufreinigung des in Schritt c) erhaltenen gefilterten Wassers mit Hilfe einer sich von b) und c) unterscheidenden weiteren Aufreinigungsmethode.

11. Filtereinheit aufweisend mindestens zwei der Filtertaschen (1) gemäß einem der Ansprüche 1 bis 9, wobei die Filtertaschen (1) in einer Stapel-Anordnung vorgesehen sind und zwischen den Filtertaschen (1) jeweils ein Spalt ausgebildet ist.

12. Filtermodul aufweisend mindestens eine Filtereinheit gemäß Anspruch 11 angeordnet in einem starren Gehäuse, wobei die Filtertaschen (1) der Filtereinheit parallel zueinander in das starre Gehäuse, insbesondere aus Kunststoff, eingesetzt sind.

13. Beutelfilter (10), insbesondere Schlauchbeutelfilter, zur Bereitstellung von Trinkwasser durch Aufreinigung von Rohwasser, wobei der Beutelfilter (10) einen Zulauf (11) zur Befüllung mit Rohwasser aufweist, im Inneren des Beutelfilters (10) eine Filtertasche (1) gemäß einem der Ansprüche 1 bis 9 angeordnet ist, sodass das Rohwasser aus dem Inneren des Beutelfilters (10) in das Innere der Filtertasche (1), also in die beiden Filtratspalten (5) der Filtertasche (1), gelangen kann, der Filtratauslass (7) der Filtertasche (1) direkt oder indirekt mit einem außenliegenden Auslass (19) verbunden ist und der Filtratauslass (7) optional mittels Filtratflanschen (8a, 8b) mit einem Gehäuse (14) für einen Aktivkohlefilter 21 zur weiteren Filtration des den Beutelfilter (10) verlassenden filtrierten Wassers verbindbar ist.

14. Filtergerät (30) aufweisend

- einen Behälter (31) zur Aufnahme von Rohwasser,

- wenigstens eine in dem genannten Behälter (31) angeordnete Filtertasche (1) gemäß einem der Ansprüche 1 bis 9,
- wobei der Behälter (31) zur Aufnahme von Rohwasser und die Filtertasche (1) in der Art zueinander angeordnet sind, dass das Wasser allein durch die Wirkung eines geostatischen Druckgefälles durch die wenigstens eine Filtertasche (1) filtrierbar ist, also in den Filtratspalt (5) gedrückt wird,
- gegebenenfalls ein an die wenigstens eine Filtertasche (1) nachgeschaltetes Gehäuse (35) eines Aktivkohlefilters und
- gegebenenfalls einen an das Gehäuse (35) eines Aktivkohlefilters nachgeschalteten Verteilerblock (37) geeignet zur Aufteilung von filtriertem Wasser auf einzeln aus dem Filtergerät (30), nach Verschließen eines Absperrventils (38), entnehmbare Flaschen (39).

15. Verwendung einer Filtertasche (1) gemäß einem der Ansprüche 1 bis 6 zur Aufreinigung von Flüssigkeiten in einem Membranbioreaktor oder zur Oberflächenwasserfiltration.

Fig. 1

Fig.2

Fig. 3A

Fig. 3B

Fig. 3C

Fig. 3D

Fig. 4A

Fig. 4B

Fig. 5

Fig. 6A

Fig. 6B          Fig. 6C

Fig. 7A

Fig. 7B

Fig. 7C

Europäisches
Patentamt

European
Patent Office

Office européen
des brevets

# EUROPÄISCHER RECHERCHENBERICHT

Nummer der Anmeldung

EP 16 16 3653

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 501 663 A (MERRILL WAYNE S [US]) 26. Februar 1985 (1985-02-26) | 1-4,6, 11-13,15 | INV. B01D63/08 |
| Y | * Zusammenfassung * | 5,7-10, | B01D29/01 |
| | * Abbildungen 2-13 * | 14 | B01D61/18 |
| | * Spalte 2, Zeilen 4-61 * | | |
| | * Spalte 3, Zeilen 9-56 * | | |
| | * Spalte 5, Zeilen 3-14 * | | |
| | * Spalte 8, Zeilen 11-39 * | | |
| | ----- | | |
| Y | EP 1 731 214 A1 (ROCHEM RO WASSERBEHANDLUNG GMBH [DE]) 13. Dezember 2006 (2006-12-13) | 7,8,10, 14 | |
| | * Abbildungen 2,3 * | | |
| | * Absätze [0002], [0004], [0028] * | | |
| | * Ansprüche 1-20 * | | |
| | ----- | | |
| A | DE 197 00 231 A1 (GEESTHACHT GKSS FORSCHUNG [DE]) 9. Juli 1998 (1998-07-09) | 1-3,6-8, 10-12, 14,15 | |
| | * Zusammenfassung * | | RECHERCHIERTE SACHGEBIETE (IPC) |
| | * Abbildung 4 * | | |
| | ----- | | |
| Y,D | US 2004/226886 A1 (HESTER JONATHAN F [US] ET AL) 18. November 2004 (2004-11-18) | 5,9 | B01D |
| A | * das ganze Dokument * | 1-4,8, 10,14,15 | |
| | ----- | | |

Der vorliegende Recherchenbericht wurde für alle Patentansprüche erstellt

| Recherchenort | Abschlußdatum der Recherche | Prüfer |
|---|---|---|
| München | 28. September 2016 | Lançon, Eveline |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 16 3653

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2016

| Im Recherchenbericht angeführtes Patentdokument | Datum der Veröffentlichung | Mitglied(er) der Patentfamilie | Datum der Veröffentlichung |
|---|---|---|---|
| US 4501663 A | 26-02-1985 | KEINE | |
| EP 1731214 A1 | 13-12-2006 | CA 2514162 A1 | 06-12-2006 |
| | | EP 1731214 A1 | 13-12-2006 |
| | | JP 2007061808 A | 15-03-2007 |
| | | KR 20060127376 A | 12-12-2006 |
| | | US 2006273001 A1 | 07-12-2006 |
| | | US 2011240545 A1 | 06-10-2011 |
| | | US 2011284451 A1 | 24-11-2011 |
| DE 19700231 A1 | 09-07-1998 | AT 221798 T | 15-08-2002 |
| | | DE 19700231 A1 | 09-07-1998 |
| | | EP 0892670 A1 | 27-01-1999 |
| | | JP H11514923 A | 21-12-1999 |
| | | US 6258270 B1 | 10-07-2001 |
| | | WO 9830316 A1 | 16-07-1998 |
| US 2004226886 A1 | 18-11-2004 | AT 435695 T | 15-07-2009 |
| | | AU 2004241942 A1 | 02-12-2004 |
| | | BR PI0409932 A | 25-04-2006 |
| | | EP 1622704 A1 | 08-02-2006 |
| | | JP 4327855 B2 | 09-09-2009 |
| | | JP 2006528069 A | 14-12-2006 |
| | | KR 20060003090 A | 09-01-2006 |
| | | MX PA05012112 A | 10-02-2006 |
| | | US 2004226886 A1 | 18-11-2004 |
| | | WO 2004103535 A1 | 02-12-2004 |

EPO FORM P0461

Für nähere Einzelheiten zu diesem Anhang : siehe Amtsblatt des Europäischen Patentamts, Nr.12/82

**EP 3 228 379 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1016449 A2
- DE 3033423 A1
- US 20050123727 A1

- WO 2008055486 A1
- WO 2006044711 A1
- US 20040226886 A1